(19) Europäisches Patentamt
European Patent Office
Office européen des brevets

(11) **EP 4 565 005 A1**

(12) **EUROPEAN PATENT APPLICATION**
published in accordance with Art. 153(4) EPC

(43) Date of publication:
**04.06.2025 Bulletin 2025/23**

(21) Application number: **23846401.0**

(22) Date of filing: **21.07.2023**

(51) International Patent Classification (IPC):
*H05B 6/10* (2006.01)   *H05B 6/36* (2006.01)

(52) Cooperative Patent Classification (CPC):
**H05B 6/104; H05B 6/10; H05B 6/36; H05B 6/365; H05B 6/44;** Y02P 10/25

(86) International application number:
**PCT/JP2023/026780**

(87) International publication number:
**WO 2024/024670 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022121529**

(71) Applicant: **NIPPON STEEL CORPORATION**
**Chiyoda-ku**
**Tokyo 100-8071 (JP)**

(72) Inventors:
• **MORITA, Kento**
**Tokyo 100-8071 (JP)**
• **MAYUMI, Yasuhiro**
**Tokyo 100-8071 (JP)**

(74) Representative: **Vossius & Partner**
**Patentanwälte Rechtsanwälte mbB**
**Siebertstrasse 3**
**81675 München (DE)**

(54) **TRANSVERSE-TYPE INDUCTION HEATING DEVICE**

(57) In one slot (1121a, 1121b, 1221a, 1221b), first copper pipes (1111a to 1111f, 1211a to 1211f) and a second copper pipe (1111g, 1111h, 1211g, 1211h) are arranged. At each position (each y-coordinate) in a heating length direction in the one slot, the first copper pipe is at a position closest to a conductor plate M. In the one slot, the second copper pipe is at a position close to the conductor plate M relative to at least one first copper pipe. In the one slot, there is at least one second copper pipe electrically connected in series to the first copper pipe.

F I G. 1

EP 4 565 005 A1

**Description**

TECHNICAL FIELD

The present invention relates to a transverse flux induction heating device. This application is based upon and claims the benefit of priority of the prior Japanese Patent Application No. 2022-121529, filed on July 29, 2022, the entire contents of which are incorporated herein by reference.

BACKGROUND ART

As a device of heating a conductor plate, there is an induction heating device. The induction heating device has a coil. An alternating magnetic field (alternating-current magnetic field) is generated from the coil of the induction heating device. An eddy current is induced in the conductor plate by the alternating magnetic field. The conductor plate is heated by Joule heat based on the eddy current. As such an induction heating device, there is a transverse flux induction heating device. The transverse flux induction heating device makes alternating magnetic fields intersect substantially perpendicular (preferably perpendicular) to the conductor plate, to thereby induce the eddy current in the conductor plate.

As the transverse flux induction heating device, there is a technique described in Patent Literature 1.

Patent Literature 1 discloses a transverse flux induction heating device in which each of a width of an upper coil and a width of a lower coil is equal to or more than an interval between the upper coil and the lower coil. Here, the width of the coil is a length of the coil in a conveyance direction of a conductor plate being a heating target.

CITATION LIST

PATENT LITERATURE

Patent Literature 1: Japanese Laid-open Patent Publication No. 2010-27470

SUMMARY OF INVENTION

TECHNICAL PROBLEM

However, the technique described in Patent Literature 1 describes that, in a case where a turn number (number of turns) of the coil is increased for enhancing a heating performance of the induction heating device, the coil is wound in the conveyance direction of the conductor plate being the heating target. Accordingly, in the technique described in Patent Literature 1, when the heating performance of the induction heating device is enhanced, a length (the width of the coil and a width of a slot) of the induction heating device in the conveyance direction of the conductor plate being the heating target is required to be increased. Therefore, in the technique described in Patent Literature 1, the heating performance of the induction heating device is enhanced since a heat capacity of the conductor plate being the heating target becomes a large capacity, and in proportion to this, the length of the induction heating device in the conveyance direction of the conductor plate being the heating target is increased (note that the heating performance is assumed to be in proportion to a square of an alternating current that flows through the coil).

The present invention has been made in view of the problems as described above, and an object thereof is to provide a transverse flux induction heating device capable of securing a heating performance required for heating a conductor plate while suppressing an increase in length in a conveyance direction of the conductor plate.

SOLUTION TO PROBLEM

A transverse flux induction heating device of the present invention is a transverse flux induction heating device including an upper inductor and a lower inductor arranged to face each other while sandwiching a conductor plate therebetween, and performing induction heating on the conductor plate by making alternating magnetic fields intersect a plate surface of the conductor plate, in which each of the upper inductor and the lower inductor has a coil and a core, a turn number of the coil is two or more, the core has a slot being a space in which the coil is arranged, the coil has a plurality of conductor portions electrically connected to each other, the conductor portions have at least one first conductor portion and at least one second conductor portion, the first conductor portion is the conductor portion at a position closest to the conductor plate at each position in a heating length direction in one of the slots, the second conductor portion is the conductor portion arranged at a position far from the conductor plate relative to at least one of the first conductor portions in one of the slots, at least a part of a position in the heating length direction of at least one of the first conductor portions and at least a part of a position in the heating length direction of at least one of the second conductor portions overlap with each other in one of the slots, the heating length direction is a direction parallel to a conveyance direction of the conductor plate, and in one of the slots, there is at least one of the second conductor portions electrically connected in series to the first conductor portion.

BRIEF DESCRIPTION OF DRAWINGS

[Fig. 1] Fig. 1 is a view illustrating a first example of a transverse flux induction heating device.
[Fig. 2] Fig. 2 is a view illustrating a second example of the transverse flux induction heating device.
[Fig. 3] Fig. 3 is a view illustrating a first example of a coil configuration.
[Fig. 4] Fig. 4 is a view illustrating one example of a core configuration.
[Fig. 5] Fig. 5 is a view illustrating a second example of the coil configuration.
[Fig. 6] Fig. 6 is a view explaining one example of a skin depth.
[Fig. 7] Fig. 7 is a view illustrating a third example of the transverse flux induction heating device.
[Fig. 8] Fig. 8 is a view illustrating a fourth example of the transverse flux induction heating device.
[Fig. 9] Fig. 9 is a view illustrating a fifth example of the transverse flux induction heating device.

DESCRIPTION OF EMBODIMENTS

Hereinafter, an embodiment of the present invention will be explained while referring to the drawings.

Note that when comparison targets such as lengths, positions, sizes and intervals are the same, this means not only a case where they are strictly the same but also a case where they are differed within a range that does not depart from the gist of the invention (differed within a tolerance range defined when designing, for example). Further, in the respective drawings, only a part required for explanation will be illustrated in a simplified manner according to need, for the convenience of explanation and notation. Further, in each drawing, x-y-z coordinates indicate a relation of directions in the drawing. A symbol of white circle (∘) with cross mark (×) given therein indicates an axis regarding which a direction from a near side toward a far side of the paper sheet is a positive direction. Further, the present embodiment exemplifies a case where an x-y plane is a horizontal plane, and a z-axis direction is a height direction.

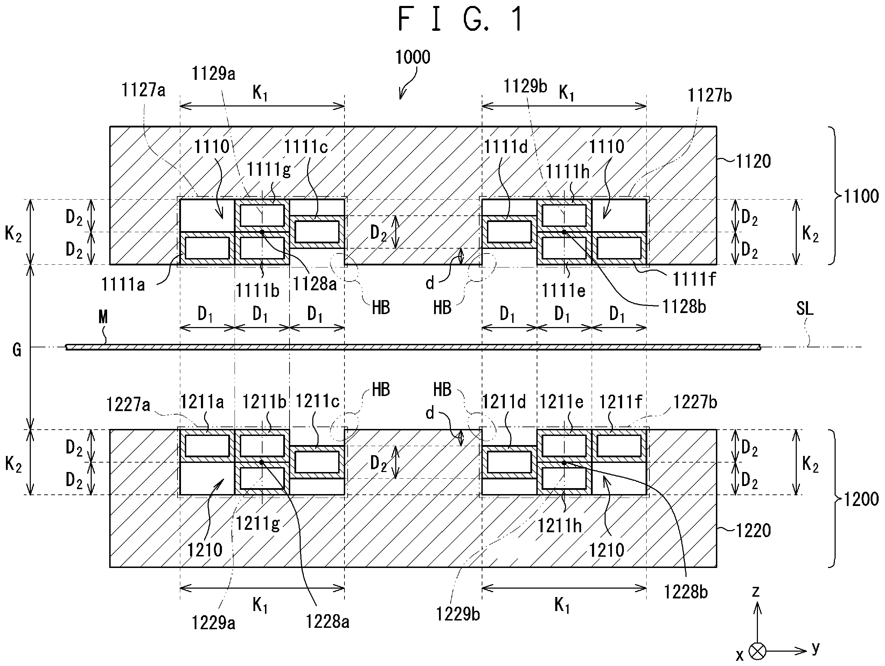

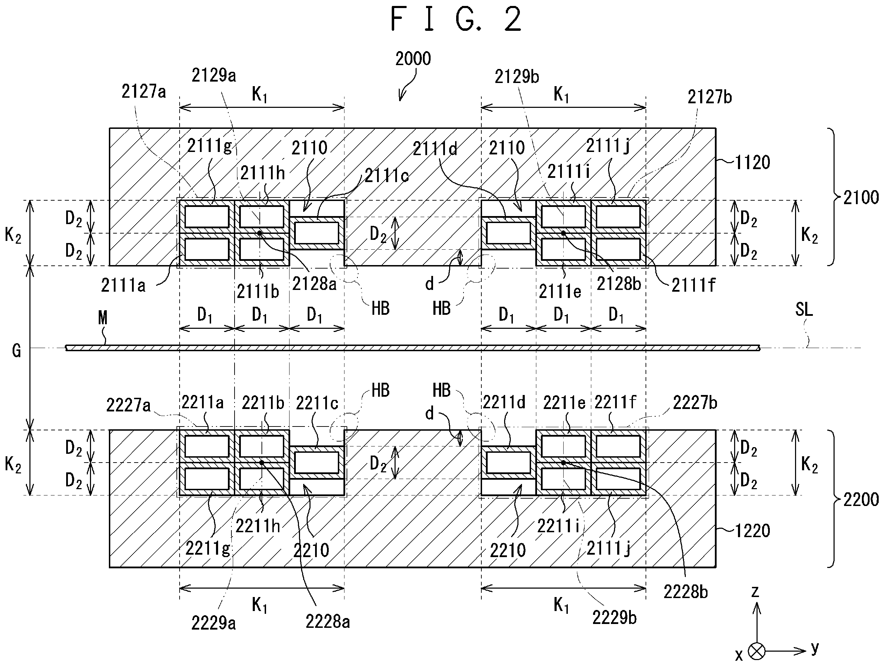

Fig. 1 is a view illustrating a first example of a transverse flux induction heating device. Fig. 2 is a view illustrating a second example of the transverse flux induction heating device. The present embodiment exemplifies a case where a conveyance direction of a conductor plate M is a y-axis positive direction, a width direction of the conductor plate M is an x-axis direction, and a plate thickness direction of the conductor plate M is a z-axis direction. Here, a direction parallel to the conveyance direction of the conductor plate M (y-axis positive direction) (specifically, the y-axis direction) is set to be referred to as a heating length direction. The heating length direction corresponds to a longitudinal direction of the conductor plate M. Fig. 1 and Fig. 2 illustrate a cross section (y-z cross section) of the transverse flux induction heating device in a case where an induction heating device 1000 is cut perpendicular to the width direction of the conductor plate M (x-axis direction) so as to pass through a gravity center position of the device. Fig. 1 illustrates one example of a transverse flux induction heating device 1000 in a case where a turn number (number of turns) of each coil is an even number. Fig. 2 illustrates one example of a transverse flux induction heating device 2000 in a case where the turn number (number of turns) of each coil is an odd number. The transverse flux induction heating devices 1000, 2000 illustrated in Fig. 1 and Fig. 2 are different only in the turn number (number of turns) of the coil.

The transverse flux induction heating devices 1000, 2000 perform induction heating on the conductor plate M by making alternating magnetic fields intersect substantially perpendicular (preferably perpendicular) to a plate surface of the conductor plate M during conveyance. Note that the conductor plate M is a metal plate such as a steel plate, for example. In the following explanation, the transverse flux induction heating device will be abbreviated to an induction heating device, according to need. Hereinbelow, one example of a configuration of the induction heating devices 1000, 2000 will be explained. Note that dimensions ($D_1$, $D_2$, $K_1$, $K_2$, and the like) of the induction heating devices 1000, 2000 will be described later in a section of (design method).

(Induction heating device 1000)

First, the configuration of the induction heating device 1000 illustrated in Fig. 1 will be explained.

The induction heating device 1000 has an upper inductor 1100 and a lower inductor 1200. The upper inductor 1100 and the lower inductor 1200 are arranged in a state of having an interval therebetween in a plate thickness direction of the conductor plate M (z-axis direction) so as to face each other while sandwiching the conductor plate M therebetween. As described above, the plate thickness direction of the conductor plate M (z-axis direction) corresponds to the direction in which the upper inductor 1100 and the lower inductor 1200 face each other. In the induction heating device 1000 illustrated in Fig. 1, a case is exemplified in which the upper inductor 1100 and the lower inductor 1200 are in a relation of plane symmetry in which a virtual plane SL is set to a plane of symmetry. The virtual plane SL is a plane passing through a center position in the plate thickness direction (z-axis direction) of the conductor plate M and parallel to the width direction (x-axis direction) and the longitudinal direction (y-axis direction) of the conductor plate M. Note that the virtual plane SL is not a real plane.

The upper inductor 1100 and the lower inductor 1200 have coils 1110, 1210, and cores 1120, 1220, respectively.

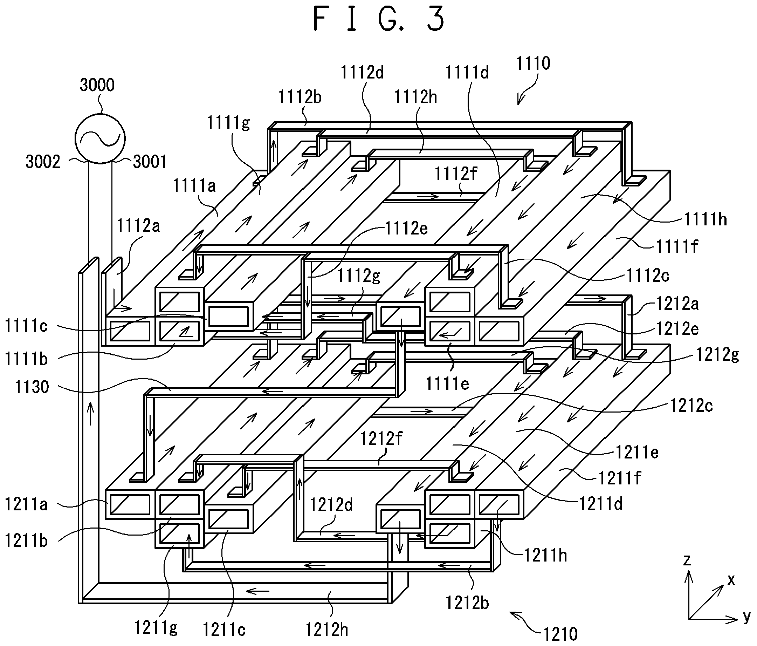

The coils 1110, 1210 are respectively arranged so that center lines of the coils 1110, 1210 become substantially orthogonal (preferably orthogonal) to the plate surface of the conductor plate M, for example. A turn number of each of the coils 1110, 1210 is N (N is an integer of 2 or more). As described above, the turn number of each of the coils 1110, 1210 provided to the induction heating device 1000 illustrated in Fig. 1 is the even number. Fig. 1 exemplifies a case where the turn number N of each of the coils 1110, 1210 is four. In an example to be described later while referring to Fig. 3, the coils 1110, 1210 are electrically connected in series. In this case, the turn number of the whole coils 1110, 1210 in the induction heating device 1000 becomes eight (= 2 × 4). On the other hand, in a case where the coils 1110, 1210 are electrically connected in parallel, the turn number of the whole coils 1110, 1210 in the induction heating device 1000 becomes four. Note that the electrical connection in series means the same as a series connection that is generally used in a field of electric circuit. Further, the electrical connection in parallel means the same as a parallel connection that is generally used in the field of electric circuit. In the explanation below, the electrical connection in series will be simply referred to as a series connection, according to need. Further, the electrical connection in parallel will be simply referred to as a parallel connection, according to need.

Fig. 3 is a view illustrating one example of a configuration of the coils 1110, 1210.

In Fig. 3, the coils 1110, 1210 have copper pipes 1111a to 1111h, 1211a to 1211h, and copper busbars 1112a to 1112h, 1212a to 1212h, respectively. Fig. 3 exemplifies a case where the induction heating device 1000 has a copper busbar 1130. Further, Fig. 3 exemplifies a case where the coils 1110, 1210 are connected in series by the copper busbar 1130. Further, in Fig. 3, arrow mark lines indicated inside the copper pipes 1111a to 1111h, 1211a to 1211h, the copper busbars 1112a to 1112h, 1212a to 1212h, and the copper busbar 1130, indicate directions of alternating currents that flow through the respective parts at a certain same time.

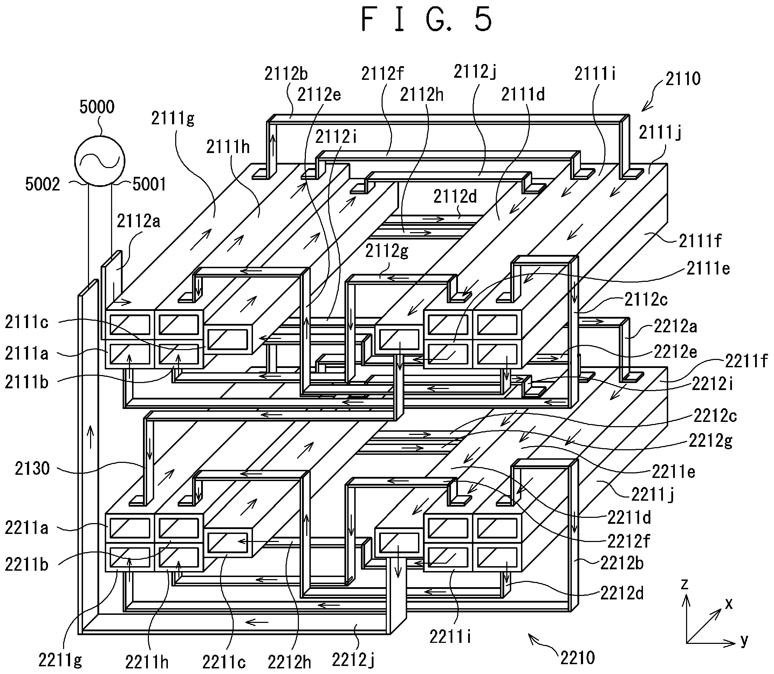

First, one example of electrical connection relation among the copper pipes 1111a to 1111h, 1211a to 1211h, the copper busbars 1112a to 1112h, 1212a to 1212h, and the copper busbar 1130, will be explained. Note that it is assumed that electrical insulation among the copper pipes 1111a to 1111h, 1211a to 1211h, the copper busbars 1112a to 1112h, 1212a to 1212h, and the copper busbar 1130 is secured except for a portion to be connected to another member (the same applies to Fig. 5 to be described later).

In Fig. 3, one end of the copper busbar 1112a is electrically connected to one end 3001 of an alternating-current power supply 3000. The other end of the copper busbar 1112a is electrically connected to one end side (x-axis negative direction side) of the copper pipe 1111a. One end of the copper busbar 1112b is electrically connected to the other end side (x-axis positive direction side) of the copper pipe 1111a. The other end of the copper busbar 1112b is electrically connected to one end side (x-axis positive direction side) of the copper pipe 1111f. One end of the copper busbar 1112c is electrically connected to the other end side (x-axis negative direction side) of the copper pipe 1111f. As described above, by using the copper busbar 1112a, the copper pipe 1111a, the copper busbar 1112b, and the copper pipe 1111f, a first turn (same turn) of the coil 1110 is configured. The copper busbar 1112c is used for electrically connecting the first turn and a second turn of the coil 1110.

The other end of the copper busbar 1112c is electrically connected to one end side (x-axis negative direction side) of the copper pipe 1111g. One end of the copper busbar 1112d is electrically connected to the other end side (x-axis positive direction side) of the copper pipe 1111g. The other end of the copper busbar 1112d is electrically connected to one end side (x-axis positive direction side) of the copper pipe 1111h. One end of the copper busbar 1112e is electrically connected to the other end side (x-axis negative direction side) of the copper pipe 1111h. As described above, by using the copper pipe 1111g, the copper busbar 1112d, and the copper pipe 1111h, the second turn (same turn) of the coil 1110 is configured. The copper busbar 1112e is used for electrically connecting the second turn and a third turn of the coil 1110.

The other end of the copper busbar 1112e is electrically connected to one end side (x-axis negative direction side) of the copper pipe 1111b. One end of the copper busbar 1112f is electrically connected to the other end side (x-axis positive direction side) of the copper pipe 1111b. The other end of the copper busbar 1112f is electrically connected to one end side (x-axis positive direction side) of the copper pipe 1111e. One end of the copper busbar 1112g is electrically connected to the other end side (x-axis negative direction side) of the copper pipe 1111e. As described above, by using the copper pipe 1111b, the copper busbar 1112f, and the copper pipe 1111e, the third turn (same turn) of the coil 1110 is configured. The copper busbar 1112g is used for electrically connecting the third turn and a fourth turn of the coil 1110.

The other end of the copper busbar 1112g is electrically connected to one end side (x-axis negative direction side) of the copper pipe 1111c. One end of the copper busbar 1112h is electrically connected to the other end side (x-axis positive direction side) of the copper pipe 1111c. The other end of the copper busbar 1112h is electrically connected to one end side (x-axis positive direction side) of the copper pipe 1111d. One end of the copper busbar 1130 is electrically connected to the other end side (x-axis negative direction side) of the copper pipe 1111d. As described above, by using the copper pipe 1111c, the copper busbar 1112h, and the copper pipe 1111d, the fourth turn (same turn) of the coil 1110 is configured. As described above, the copper busbar 1130 is used for connecting the coils 1110, 1210 (the fourth turn of the coil 1110 and a first turn of the coil 1210) in series. The other end of the copper busbar 1130 is electrically connected to one end side (x-axis negative direction side) of the copper pipe 1211a provided to the coil 1210.

In the coil 1110 provided to the upper inductor 1100, a winding start portion of the first turn (the copper busbar 1112a) is electrically connected to the one end 3001 of the alternating-current power supply 3000. On the contrary, in the coil 1210 provided to the lower inductor 1200, a winding start portion of the first turn (the copper pipe 1211a) is electrically connected to the copper busbar 1130. Further, in the coil 1110 provided to the upper inductor 1100, a winding end portion of the fourth turn (the copper pipe 1111d) is electrically connected to the copper busbar 1130. On the contrary, in the coil 1210 provided to the lower inductor 1200, a winding end portion of the fourth turn (the copper busbar 1212h) is electrically connected to the other end 3002 of the alternating-current power supply 3000.

Except for these points, the electrical connection relation between the copper pipes 1211a to 1211h and the copper busbars 1212a to 1212h of the coil 1210 provided to the lower inductor 1200, is similar to the electrical connection relation between the copper pipes 1111a to 1111h and the copper busbars 1112a to 1112h of the coil 1110 provided to the upper inductor 1100. Therefore, as the explanation of the coil 1210 provided to the lower inductor 1200, an explanation regarding the copper pipes 1211a to 1211h and the copper busbars 1212a to 1212h used for configuring respective turns will be made, and a concrete explanation of the connection relation between the copper pipes 1211a to 1211h and the copper busbars 1212a to 1212h used for configuring the first turn to the fourth turn, will be omitted.

First, by using the copper pipe 1211a, the copper busbar 1212a, and the copper pipe 1211f, the first turn (same turn) of the coil 1210 is configured. The copper busbar 1212b is used for electrically connecting the first turn and the second turn of the coil 1210.

Further, by using the copper pipe 1211g, the copper busbar 1212c, and the copper pipe 1211h, the second turn (same turn) of the coil 1210 is configured. The copper busbar 1212d is used for electrically connecting the second turn and the third turn of the coil 1210.

Further, by using the copper pipe 1211b, the copper busbar 1212e, and the copper pipe 1211e, the third turn (same turn) of the coil 1210 is configured. The copper busbar 1212f is used for electrically connecting the third turn and the fourth turn of the coil 1210.

Further, by using the copper pipe 1211c, the copper busbar 1212g, and the copper pipe 1211d, the fourth turn (same turn) of the coil 1210 is configured. To the other end side (x-axis negative direction side) of the copper pipe 1211d, one end of the copper busbar 1212h is electrically connected. The other end of the copper busbar 1212h is electrically connected to the other end 3002 of the alternating-current power supply 3000.

Fig. 1 and Fig. 3 exemplify a case where the size and the shape of the copper pipes 1111a to 1111h, 1211a to 1211h are the same. The copper pipes 1111a to 1111h, 1211a to 1211h have a hollow rectangular parallelepiped shape. A cooling medium (cooling water, for example) is supplied to hollow portions of the copper pipes 1111a to 1111h, 1211a to 1211h.

Note that Fig. 3 exemplifies a case where the conductor plate M is subjected to induction heating by realizing that, since the coils 1110, 1210 are connected in series, directions at the same time of magnetic fluxes generated from the coils 1110, 1210 by the alternating currents that flow through the coils 1110, 1210 are set to be substantially the same (preferably the same), and alternating magnetic fields are made to intersect substantially perpendicular (preferably perpendicular) to the plate surface of the conductor plate M.

However, as long as it is realized that the directions at the same time of the magnetic fluxes generated from the coils 1110, 1210 by the alternating currents that flow through the coils 1110, 1210 are set to be substantially the same (preferably the same), and the alternating magnetic fields are made to intersect substantially perpendicular (preferably perpendicular) to the plate surface of the conductor plate M, the coils 1110, 1210 may also be connected in parallel. Further, the coils 1110, 1210 may not be electrically connected. In this case, the alternating currents that flow through the coils 1110, 1210 are alternating currents supplied from separate alternating-current power supplies.

When the coils 1110, 1210 are connected in parallel, the copper busbar 1130 becomes unnecessary, for example. Instead of that, the one end side (x-axis negative direction side) of the copper pipe 1211a provided to the coil 1210 is connected to the one end 3001 of the alternating-current power supply 3000 via the copper busbar 1112a and the like. Further, the other end side (x-axis negative direction side) of the copper pipe 1111d provided to the coil 1110 is connected to the other end 3002 of the alternating-current power supply 3000. The other end side (x-axis negative direction side) of the copper pipe 1111d provided to the coil 1110 may also be connected to the other end 3002 of the alternating-current power supply 3000 via the copper busbar 1212h and the like. When the coils 1110, 1210 are connected in parallel, the turn number of the whole coils 1110, 1210 in the induction heating device 1000 becomes four.

Note that the shape of the conductor portion configuring the coil is not limited to the hollow rectangular parallelepiped shape. The shape may also be, for example, a hollow cylindrical shape. Further, it is also possible that the conductor portion configuring the coil does not have the hollow region. When the conductor configuring the coil does not have the hollow region as above, it is also possible to configure that a pipe to be a path through which the cooling medium (cooling water, for example) flows is arranged so as to surround the conductor portion configuring the coil, for example.

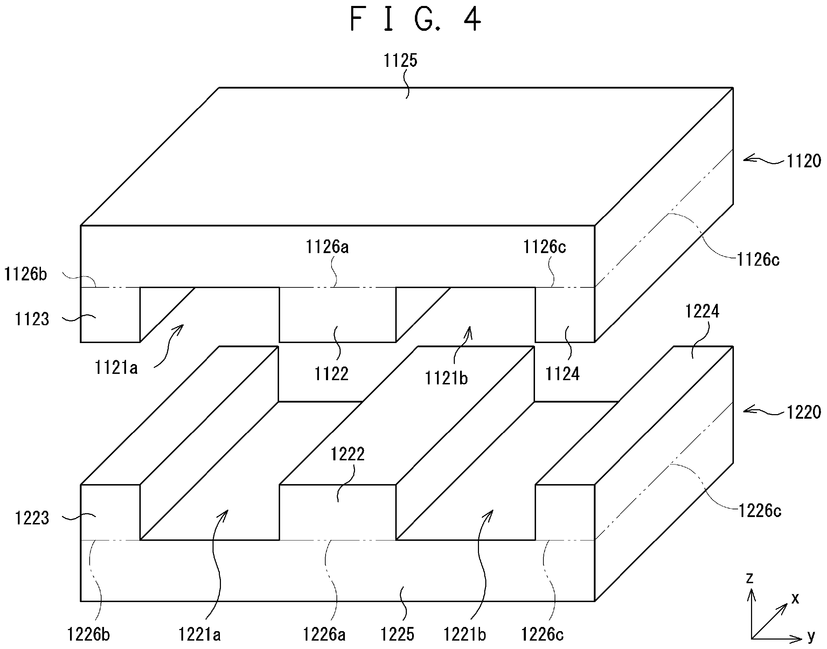

Fig. 4 is a view illustrating one example a configuration of the cores 1120, 1220. The present embodiment exemplifies a case where the cores 1120, 1220 are so-called E-shaped cores. The cores 1120, 1220 are formed by using a soft magnetic material. The cores 1120, 1220 have slots 1121a to 1121b, 1221a to 1221b being spaces in which the coils 1110, 1210 are arranged, respectively. In the example illustrated in Fig. 1 and Fig. 3, a case is exemplified in which the copper pipes 1111a to 1111c, 1111g are arranged in the slot 1121a of the core 1120. Further, in the example illustrated in Fig. 1 and Fig. 3, a case is exemplified in which the copper pipes 1111d to 1111f, 1111h are arranged in the slot 1121b of the core 1120. In like manner, in the example illustrated in Fig. 1 and Fig. 3, a case is exemplified in which the copper pipes 1211a to 1211c, 1211g are arranged in the slot 1221a of the core 1220. Further, in the example illustrated in Fig. 1 and Fig. 3, a case is exemplified in which the copper pipes 1211d to 1211f, 1211h are arranged in the slot 1221b of the core 1220.

As described above, when placing the coils 1110, 1210 in the cores 1120, 1220, there is a need to arrange the copper pipes 1111a to 1111h, 1211a to 1211h in the slots 1121a to 1211b, 1221a to 1221b of the cores 1120, 1220, respectively. Therefore, the copper busbars 1112a to 1112h, 1212a to 1212h are respectively attached to the copper pipes 1111a to 1111h, 1211a to 1211h, while avoiding regions of the copper pipes 1111a to 1111h, 1211a to 1211h that are attached to the cores 1120, 1220. For example, in Fig. 3, the regions of the copper pipes 1111a to 1111h, 1211a to 1211h to which the copper busbars 1112a to 1112h, 1212a to 1212h are attached, are respectively arranged outside the slots 1121a to 1211b, 1221a to 1221b.

The cores 1120, 1220 have first leg portions 1122, 1222, second leg portions 1123, 1223, third leg portions 1124, 1224, and body portions 1125, 1225, respectively.

In Fig. 4, with respect to the core 1120, a boundary line 1126a between the first leg portion 1122 and the body portion 1125, a boundary line 1126b between the second leg portion 1123 and the body portion 1125, and a boundary line 1126c between the third leg portion 1124 and the body portion 1125 are respectively indicated as virtual lines. In like manner, with respect to the core 1220, a boundary line 1226a between the first leg portion 1222 and the body portion 1225, a boundary line 1226b between the second leg portion 1223 and the body portion 1225, and a boundary line 1226c between the third leg portion 1224 and the body portion 1225 are respectively indicated as virtual lines. Note that these virtual lines are not real lines.

The first leg portions 1122, 1222 are arranged at center positions in the heating length direction (y-axis direction) of the cores 1120, 1220, respectively. The second leg portions 1123, 1223, and the third leg portions 1124, 1224 are respectively arranged on both sides in the heating length direction (y-axis direction) of the first leg portions 1122, 1222, in a state of having an interval with respect to the first leg portions 1122, 1222. Concretely, Fig. 4 exemplifies a case where the second leg portions 1123, 1223 are respectively arranged on the y-axis negative direction side, in a state of having an interval with respect to the first leg portions 1122, 1222. In like manner, Fig. 4 exemplifies a case where the third leg portions 1124, 1224 are respectively arranged on the y-axis positive direction side, in a state of having an interval with respect to the first leg portions 1122, 1222.

Fig. 4 exemplifies a case where the first leg portions 1122, 1222, the second leg portions 1123, 1223, the third leg portions 1124, 1224, and the body portions 1125, 1225 have a rectangular parallelepiped shape. Further, Fig. 4 exemplifies a case where lengths in the width direction of the conductor plate M (x-axis direction) of the first leg portions 1122, 1222, the second leg portions 1123, 1223, the third leg portions 1124, 1224, and the body portions 1125, 1225 are the same. Further, Fig. 4 exemplifies a case where lengths in the plate thickness direction of the conductor plate M (z-axis direction) of the first leg portions 1122, 1222, the second leg portions 1123, 1223, and the third leg portions 1124, 1224 are the same.

Further, Fig. 4 exemplifies a case where the body portion 1125 is arranged on a back side, relative to the first leg portion 1122, the second leg portion 1123, and the third leg portion 1124. The back side is an opposite side of a side where the conductor plate M exists (namely, a side where the conductor plate M does not exist). Concretely, Fig. 4 exemplifies a case where base end faces (end faces on the opposite of the conductor plate M side) of the first leg portion 1122, the second leg portion 1123, and the third leg portion 1124 are connected to the body portion 1125 in a seamless manner. Note that the base end faces of the first leg portion 1122, the second leg portion 1123, and the third leg portion 1124 are end faces on the z-axis positive direction side. Therefore, the first leg portion 1122, the second leg portion 1123, and the third leg portion 1124 are magnetically connected to the body portion 1125. When the first leg portion 1122, the second leg portion 1123 and the third leg portion 1124, and the body portion 1125 are magnetically connected, this means that the same main magnetic flux flows between the first leg portion 1122, the second leg portion 1123 and the third leg portion 1124, and the body portion 1125. The main magnetic flux is a magnetic flux that contributes to heating of the conductor plate M. For example, the main magnetic flux flows through a closed path (magnetic path) passing through the core 1120 provided to the upper inductor 1100, the conductor plate M, and the core 1220 provided to the lower inductor 1200.

Further, Fig. 4 exemplifies a case where tip faces of the first leg portion 1122, the second leg portion 1123, and the third leg portion 1124 face the plate surface (the surface on the z-axis positive direction side) of the conductor plate M in a state of having an interval therebetween.

In like manner, regarding the core 1220, a case is exemplified in which the body portion 1225 is arranged on the back side, relative to the first leg portion 1222, the second leg portion 1223, and the third leg portion 1224. Concretely, Fig. 4 exemplifies a case where base end faces of the first leg portion 1222, the second leg portion 1223, and the third leg portion 1224 are connected to the body portion 1225 in a seamless manner. Note that the base end faces of the first leg portion 1222, the second leg portion 1223, and the third leg portion 1224 are end faces on the z-axis negative direction side. Therefore, the first leg portion 1222, the second leg portion 1223, and the third leg portion 1224 are magnetically connected to the body portion 1225.

Further, Fig. 4 exemplifies a case where tip faces of the first leg portion 1222, the second leg portion 1223, and the third leg portion 1224 face the plate surface (the surface on the z-axis negative direction side) of the conductor plate M in a state of having an interval therebetween.

Further, Fig. 4 exemplifies a case where the shape and the size of the core 1220 are the same as the shape and the size of the core 1120.

Note that here, for the convenience of explanation, the configuration of the cores 1120, 1220 has been explained while dividing it into the first leg portions 1122, 1222, the second leg portions 1123, 1223, the third leg portions 1124, 1224, and the body portions 1125, 1225, respectively. However, the first leg portions 1122, 1222, the second leg portions 1123, 1223, the third leg portions 1124, 1224, and the body portions 1125, 1225 are integrated, respectively. Therefore, there is no boundary line at the boundaries among the first leg portions 1122, 1222, the second leg portions 1123, 1223, the third leg portions 1124, 1224, and the body portions 1125, 1225 (there exists no two-dot chain line illustrated in Fig. 4, as described above). However, it is also possible that they are manufactured as separate portions and combined, to thereby configure one core. For example, at least two portions out of the first leg portion 1122, the second leg portion 1123, the third leg portion 1124, and the body portion 1125 may be arranged in a state of having an interval therebetween. However, the at least two portions are configured and arranged so that the same main magnetic flux flows through the at least two portions. In like manner, at least two portions out of the first leg portion 1222, the second leg portion 1223, the third leg portion 1224, and the body portion 1225 may be arranged in a state of having an interval therebetween. However, the at least two portions are configured and arranged so that the same main magnetic flux flows through the at least two portions.

Here, in order to enhance the heating performance in the heating length direction (y-axis direction) of the induction heating device, there is a need to increase the turn number of the coil within a range where a current density of the conductor portion configuring the coil does not exceed a current density allowable in the conductor portion. If, in such a case, the coil is arranged only in the heating length direction (y-axis direction) of the induction heating device, the length in the heating length direction of the induction heating device is increased. On the other hand, the induction heating device performs induction heating on the conductor plate M that is being conveyed in the heating length direction (y-axis direction). Therefore, if the length in the heating length direction (y-axis direction) of the induction heating device is increased, an installation space of another equipment may be narrowed in the heating length direction (y-axis direction), for example.

Accordingly, the present inventors found out that it is preferable to configure the coils 1110, 1210 as illustrated in Fig. 1, for example, in order to configure the induction heating device so that it has a heating performance required for heating the conductor plate M, while suppressing the increase in length in the heating length direction (y-axis direction). Hereinafter, one example of the configuration of the coils 1110, 1210 for realizing the above, will be explained.

First, the coils 1110, 1210 are configured to have the plurality of copper pipes 1111a to 1111h, 1211a to 1211h that are electrically connected to each other. In the example illustrated in Fig. 1 and Fig. 3, each of the copper pipes 1111a to 1111h, 1211a to 1211h is one example of the conductor portion. Note that the conductor portion may be configured by a conductor whose material is not copper. Further, the conductor portion may not be a pipe.

Further, at least two copper pipes out of the copper pipes 1111a to 1111h, 1211a to 1211h are respectively arranged in one slot 1121a, 1121b, 1221a, 1221b.

In the one slot 1121a, 1121b, 1221a, 1221b, at least one of the copper pipes 1111a to 1111f, 1211a to 1211f corresponding to (A) below is configured to be arranged. In the following explanation, the copper pipe corresponding to (A) will be referred to as a first copper pipe, according to need.

(A) The first copper pipes 1111a to 1111c, 1111d to 1111f, 1211a to 1211c, 1211d to 1211f are copper pipes that are arranged at positions closest to the conductor plate M, at respective positions (respective y-coordinates) in the heating length direction (y-axis direction) in the one slot 1121a, 1121b, 1221a, 1221b.

In a case where a plurality of copper pipes (for example, the copper pipes 1111b, 1111g) are arranged in the plate thickness direction of the conductor plate M (z-axis direction) at each position (each y-coordinate) in the heating length direction (y-axis direction) in the one slot 1121a, 1121b, 1221a, 1221b, the copper pipe (for example, the copper pipe 1111b) arranged at a position closest to the conductor plate M out of the plurality of copper pipes, is the first copper pipe.

On the other hand, when there is one copper pipe that exists in the one slot 1121a, 1121b, 1221a, 1221b, at each position (each y-coordinate) in the heating length direction (y-axis direction) in the slot, that copper pipe (for example, the copper pipes 1111a, 1111c) is the first copper pipe.

Fig. 1 and Fig. 3 exemplify a case where the copper pipes 1111a to 1111f, 1211a to 1211f are the first copper pipes.

Further, in the one slot 1121a, 1121b, 1221a, 1221b, at least one conductor portion is arranged at a position far from the conductor plate M relative to the first copper pipe 1111b, 1111e, 1211b, 1211e being at least one of the first copper pipes 1111a to 1111f, 1211a to 1211f. In the explanation below, such a copper pipe will be referred to as a second copper pipe, according to need. Fig. 1 to Fig. 3 exemplify a case where the copper pipes 1111g to 1111h, 1211g to 1211h are the second copper pipes.

Further, in the one slot 1121a, 1121b, 1221a, 1221b, at least a part of the position (y-coordinate) in the heating length direction (y-axis direction) of at least one first copper pipe 1111b, 1111e, 1211b, 1211e, and at least a part of the position in the heating length direction of at least one second copper pipe 1111g, 1111h, 1211g, 1211h are mutually overlapped. Fig. 1 illustrates a case where, at all positions (y-coordinates) in the heating length direction (y-axis direction), the positions in the heating length direction of the first copper pipes 1111b, 1111e, 1211b, 1211e, and the positions in the heating length direction of the second copper pipes 1111g, 1111h, 1211g, 1211h are mutually overlapped, respectively.

In the example illustrated in Fig. 1 and Fig. 3, each of the first copper pipes 1111a to 1111f, 1211a to 1211f is one example of the first conductor portion. Further, each of the second copper pipes 1111g to 1111h, 1211g to 1211h is one example of the second conductor portion.

Further, in the one slot 1121a, 1121b, 1221a, 1221b, it is set that the first copper pipes 1111a to 1111f, 1211a to 1211f, and the second copper pipes 1111g to 1111h, 1211g to 1211h configure different turns in the coils 1110, 1210, respectively. The different turn in the coil means that the order of turn is not the same in the coil.

For example, as described above, the first copper pipes 1111b, 1111e configure the third turn of the coil 1110, and the second copper pipes 1111g, 1111h configure the second turn of the coil 1110. Therefore, the first copper pipes 1111b, 1111e, and the second copper pipes 1111g, 1111h configure different turns, respectively, in the coil 1110. In this case, the first copper pipes 1111b, 1111e, and the second copper pipes 1111g, 1111h are connected in series, respectively.

In like manner, the first copper pipes 1211b, 1211e configure the third turn of the coil 1210, and the second copper pipes 1211g, 1211h configure the second turn of the coil 1210. Therefore, the first copper pipes 1211b, 1211e, and the second copper pipes 1211g, 1211h configure different turns, respectively, in the coil 1210. In this case, the first copper pipes 1211b, 1211e, and the second copper pipes 1211g, 1211h are connected in series, respectively.

If it is configured as above, when compared to a case where the copper pipes are arranged only in the heating length direction (y-axis direction), it is possible to increase the turn number N of the coils 1110, 1210 within a range where a current density of the copper pipes 1111a to 1111h, 1211a to 1211h that configure the coils 1110, 1210 does not exceed a current density allowable in the copper pipes, while suppressing the increase in length in the heating length direction (y-axis direction). Accordingly, it is possible to configure the induction heating device 1000 so that it has a heating performance required for heating the conductor plate M, while suppressing the increase in length in the heating length direction (y-axis direction) of the induction heating device 1000.

Further, as exemplified in Fig. 1 and Fig. 3, in the one slot 1121a, 1121b, 1221a, 1221b, it is preferable that the first copper pipes 1111a to 1111f, 1211a to 1211f also mutually configure different turns. This is because the turn number N of the coils 1110, 1210 can be further increased while suppressing the increase in length in the heating length direction (y-axis direction) of the induction heating device 1000.

Further, when configuring the induction heating device 1000 as described above, it is preferable to arrange the plurality of copper pipes 1111a to 1111c, 1111d to 1111f, 1211a to 1211c, 1211d to 1211f in the heating length direction (y-axis direction). This is because the turn number of the coils 1110, 1210 can be further increased.

Further, when the coil 1110 exists in a region with an excessive magnetic flux density, alternating currents that flow through the coils 1110, 1210 are likely to be drawn to surfaces of the coils 1110, 1210 (copper pipes). Therefore, a current density of the alternating currents that flow through the coils 1110, 1210 (copper pipes) is likely to be excessively large. In this case, the copper pipes are locally overheated. This may consequently deteriorate the quality of the coils 1110, 1210. For example, melting loss of the copper pipes may occur. Therefore, it is preferable to configure that the copper pipes 1111a to 1111h, 1211a to 1211h are not arranged in a region with the highest magnetic flux density in the one slot 1121a, 1121b, 1221a, 1221b, when the cores 1120, 1220 are excited by the alternating currents that flow through the coils 1110, 1210.

Based on results of electromagnetic field analysis with respect to the induction heating device, and the like, the present inventors obtained findings that, when the cores 1120, 1220 are so-called E-shaped cores illustrated in Fig. 1 and Fig. 4, a magnetic flux density becomes high in a high magnetic flux density region HB illustrated in Fig. 1, and a region with the highest magnetic flux density in the one slot 1121a, 1121b, 1221a, 1221b, is included in the high magnetic flux density region HB. Note that in Fig. 1, the high magnetic flux density region HB is simplified for the convenience of explanation and notation (this also similarly applies to Fig. 2). The high magnetic flux density regions HB include regions in the vicinity of a boundary on a tip side (a side close to the conductor plate M) between the slots 1121a, 1121b, 1221a, 1221b of the cores 1120, 1220, and the first leg portions 1122, 1222 of the cores 1120, 1220. Accordingly, it is preferable that the copper pipes 1111a to 1111h, 1211a to 1211h are not arranged in the high magnetic flux density regions HB. Here, the high magnetic flux density region HB is preferably an insulating region. The present embodiment exemplifies a case where the high magnetic flux density region HB is space (air). However, an object (preferably an insulator) may also be arranged in the high magnetic flux density region HB.

When it is configured that the copper pipes 1111a to 1111h, 1211a to 1211h are not arranged in the high magnetic flux density regions HB, it is preferable to arrange the first copper pipe 1111c, 1111d, 1211c, 1211d at a position far from the conductor plate M relative to the high density region HB so that at least a part of the position (y-coordinate) in the heating length direction (y-axis direction) overlaps with the high density region HB, in the one slot 1121a, 1121b, 1221a, 1221b. By arranging the first copper pipes 1111c, 1111d, 1211c, 1211d at such positions, it is possible to reduce the number of the copper pipes to be arranged in the heating length direction (y-axis direction). Therefore, it is possible to reduce the length in the heating length direction of the induction heating device.

When the cores 1120, 1220 are so-called E-shaped cores as illustrated in Fig. 1 and Fig. 4, in order not to arrange the copper pipes 1111a to 1111h, 1211a to 1211h in the high magnetic flux density regions HB, out of the copper pipes arranged in the one slot 1121a, 1121b, 1221a, 1221b of the cores 1120, 1220, the first copper pipes 1111c, 1111d, 1211c, 1211d arranged at positions closest to the first leg portions 1122, 1222 of the cores 1120, 1220, are preferably arranged at positions far from the conductor plate M relative to tip faces (end faces facing the conductor plate M while having an interval therebetween) of the first leg portions 1122, 1222.

In the explanation below, the first copper pipe arranged at the position far from the conductor plate M relative to the high density region HB, so that at least a part of the position (y-coordinate) in the heating length direction (y-axis direction) overlaps with the high density region HB, will be referred to as a retract first copper pipe, according to need. Fig. 1 and Fig. 3 exemplify a case where the copper pipes 1111c, 1111d, 1211c, 1211d are the retract first copper pipes.

Note that in Fig. 1, Fig. 3, and Fig. 4, a case is exemplified in which the first copper pipes 1111a to 1111b, 1111e to 1111f, 1211a to 1211b, 1211e to 1211f exist at a position close to the conductor plate M relative to the retract first copper pipe 1111c, 1111d, 1211c, 1211d in the one slot 1121a, 1121b, 1221a, 1221b.

Further, when it is configured that the copper pipes 1111a to 1111h, 1211a to 1211h are not arranged in the high magnetic flux density regions HB (the regions with the highest magnetic flux density), a space where the retract first copper pipe 1111c, 1111d, 1211c, 1211d is arranged is sometimes narrowed in the one slot 1121a, 1121b, 1221a, 1221b. Accordingly, it is preferable to realize at least one of the following (a) to (d).

(a) In the one slot 1121a, 1121b, 1221a, 1221b, the number of the first copper pipe and the second copper pipe arranged in the plate thickness direction of the conductor plate M (z-axis direction) is different (changes) in the heating length direction (y-axis direction).

In the example illustrated in Fig. 1, Fig. 3, and Fig. 4, in the one slot 1121a, the number of the first copper pipe and the second copper pipe arranged in the z-axis direction on a relatively y-axis positive direction side, is one (refer to the first copper pipe 1111c). Further, in the one slot 1121a, the number of the first copper pipe and the second copper pipe arranged in the z-axis direction on a relatively y-axis center side, is two (refer to the first copper pipe 1111b and the second copper pipe 1111g). Further, in the one slot 1121a, the number of the first copper pipe and the second copper pipe arranged in the z-axis direction on a relatively y-axis negative direction side, is one (refer to the first copper pipe 1111a).

(b) In the one slot 1121a, 1121b, 1221a, 1221b, the number of the copper pipe arranged in the plate thickness direction of the conductor plate M (z-axis direction), is the smallest at the position where the position (y-coordinate) in the heating length direction (y-axis direction) overlaps with the high magnetic flux density region HB (the region with the highest magnetic flux density). Note that the position where the position in the heating length direction (y-axis direction) overlaps with the high magnetic flux density region HB, is a position at which the retract first copper pipe exists.

In the example illustrated in Fig. 1, Fig. 3, and Fig. 4, the number of the copper pipe arranged in the plate thickness direction of the conductor plate M (z-axis direction) in the one slot 1121a, is one (the smallest) at the position where the position (y-coordinate) in the heating length direction (y-axis direction) overlaps with the high magnetic flux density region HB (the region with the highest magnetic flux density) (refer to the first copper pipe 1111c).

(c) In the one slot 1121a, 1121b, 1221a, 1221b, the first copper pipe at a position where at least a part of the position (y-coordinate) in the heating length direction (y-axis direction) overlaps with the high magnetic flux density region HB (the region with the highest magnetic flux density), is at a position far from the conductor plate M relative to the other first copper pipes. Note that the first copper pipe at a position where the position in the heating length direction overlaps with the high magnetic flux density region HB, is the retract first copper pipe.

In the example illustrated in Fig. 1, Fig. 3, and Fig. 4, in the one slot 1121a, the first copper pipe 1111c at a position where at least a part of the position (y-coordinate) in the heating length direction (y-axis direction) overlaps with the high magnetic flux density region HB (the region with the highest magnetic flux density), is at a position far from the conductor plate M relative to the other first copper pipes 1111a, 1111b.

(d) In a cross section (y-z cross section) in a case where the induction heating device 1000 is cut perpendicular to the width direction of the conductor plate M (x-axis direction), the first copper pipe and the second copper pipe are arranged in an asymmetric manner with respect to a reference axis in the one slot 1121a, 1121b, 1221a, 1221b. The reference axis is a straight line passing through a centroid position of a figure defined by a contour line of one slot appeared in the cross section (y-z cross section) in the case where the induction heating device is cut perpendicular to the width direction of the conductor plate M (x-axis direction), and extending in the plate thickness direction of the conductor plate M (z-axis direction). In other words, the first copper pipe and the second copper pipe arranged in the one slot 1121a, 1121b, 1221a, 1221b, are not arranged so that they satisfy a relation of line symmetry in which the reference axis is set to a symmetry axis. Note that the cross section (y-z cross section) in the case where the induction heating device 1000 is cut perpendicular to the width direction of the conductor plate M (x-axis direction), corresponds to a cross section in a case where the induction heating device 1000 is cut parallel to the heating length direction (y-axis direction) and the plate thickness direction of the conductor plate M (z-axis direction).

In the example illustrated in Fig. 1, Fig. 3, and Fig. 4, figures defined by contour lines of the slots 1121a, 1121b, 1221a, 1221b each being one slot appeared in the cross section (y-z cross section) in the case where the induction heating device is cut perpendicular to the width direction of the conductor plate M (x-axis direction), are rectangles 1127a, 1127b, 1227a, 1127b, respectively (refer to Fig. 1). Note that for the convenience of notation, in Fig. 1, virtual lines expressing the rectangles 1127a, 1127b, 1227a, 1127b are illustrated on the outer side relative to the actual contour lines of the slots 1121a, 1121b, 1221a, 1221b, respectively (this also similarly applies to later-described Fig. 2). Note that out of the contour lines of the slots 1121a, 1121b, 1221a, 1221b, the contour line of a portion opened toward the conductor plate M side does not exist (this also similarly applies to later-described Fig. 2). Further, out of the contour lines of the slots 1121a, 1121b, 1221a, 1221b, the contour line of the portion opened toward the conductor plate M side is a straight line connecting both ends of the opening portion of the corresponding slot at the shortest distance, for example. The both ends of the opening portion of the slot are, for example, end points positioned on the metal plate M side and the slot side, out of end points of two leg portions at positions sandwiching the slot therebetween (for example, the second leg portion 1123 and the third leg portion 1124 sandwiching the slot 1121a therebetween).

Straight lines 1129a, 1129b, 1229a, 1229b passing through centroid positions 1128a, 1128b, 1228a, 1228b of the rectangles 1127a, 1127b, 1227a, 1227b, and extending in the plate thickness direction of the conductor plate M (z-axis direction), are respectively symmetry axes in the slots 1121a, 1121b, 1221a, 1221b each being one slot. Note that the straight lines 1129a, 1129b, 1229a, 1229b are not real lines.

For example, in the one slot 1121a, the first copper pipes 1111a to 1111c and the second copper pipe 1111g do not satisfy a relation of line symmetry in which the straight line 1129a is set to the symmetry axis.

Further, the induction heating device 1000 may also have a not-illustrated shield plate for preventing overheating of an edge portion (an end portion in the width direction) of the conductor plate M. For example, the shield plates are arranged between the edge portion of the conductor plate M, and the cores 1120, 1220, respectively. Further, the shield plate moves in accordance with the width of the conductor plate M and a meandering amount (a movement amount in the width direction) of the conductor plate M. Note that the shield plate is used for suppressing the passage of the main magnetic flux through the edge portion of the conductor plate M.

(Induction heating device 2000)

Next, a configuration of an induction heating device 2000 illustrated in Fig. 2 will be explained.

The induction heating device 2000 has an upper inductor 2100 and a lower inductor 2200. The upper inductor 2100 and the lower inductor 2200 are arranged in a state of having an interval therebetween in the plate thickness direction of the conductor plate M so as to face each other while sandwiching the conductor plate M therebetween. Also in the induction heating device 2000 illustrated in Fig. 2, a case is exemplified in which the upper inductor 2100 and the lower inductor 2200 are in a relation of plane symmetry in which a virtual plane SL is set to a plane of symmetry, similarly to the induction heating device 1000 illustrated in Fig. 1.

The upper inductor 2100 and the lower inductor 2200 have coils 2110, 2210, and cores 1120, 1220, respectively. As described above, the induction heating device 1000 illustrated in Fig. 1 and the induction heating device 2000 illustrated in Fig. 2 are different only in the turn number (number of turns) of the coil. Therefore, although one example of the configuration of the induction heating device 2000 will be explained hereinbelow, the configuration of the induction heating device 2000 illustrated in Fig. 2 can also be analogized from the description of the section of (induction heating device 1000) described above, so that a detailed explanation regarding reasons, advantages and so on of adopting the configuration will be omitted.

In Fig. 3, a turn number of each of the coils 2110, 2210 is N (N is an integer of 2 or more). As described above, the turn number of each of the coils 2110, 2210 provided to the induction heating device 2000 illustrated in Fig. 2 is the odd number. Fig. 2 exemplifies a case where the turn number N of each of the coils 2110, 2210 is five. In an example to be described later while referring to Fig. 5, the coils 2110, 2210 are connected in series. In this case, the turn number of the whole coils 2110, 2210 in the induction heating device 2000 becomes ten $(= 2 \times 5)$. On the other hand, in a case where the coils 2110, 1210 are connected in parallel, the turn number of the whole coils 1110, 1210 in the induction heating device 1000 becomes five.

Fig. 5 is a view illustrating one example of a configuration of the coils 2110, 2210.

The coils 2110, 2210 have copper pipes 2111a to 2111j, 2211a to 2211j, and copper busbars 2112a to 2112j, 2212a to 2212j. Fig. 5 exemplifies a case where the induction heating device 1000 has a copper busbar 2130. Further, Fig. 5 exemplifies a case where the coils 2110, 2210 are connected in series by the copper busbar 2130. Further, also in Fig. 5, arrow mark lines indicated inside the copper pipes 2111a to 2111j, 2211a to 2211j, the copper busbars 2112a to 2112j, 2212a to 2212j, and the copper busbar 2130, indicate directions of alternating currents that flow through the respective parts at a certain same time, similarly to Fig. 3.

First, one example of electrical connection relation among the copper pipes 2111a to 2111j, 2211a to 2211j, the copper busbars 2112a to 2112j, 2212a to 2212j, and the copper busbar 2130, will be explained.

One end of the copper busbar 2112a is electrically connected to one end 5001 of an alternating-current power supply 5000. The other end of the copper busbar 2112a is electrically connected to one end side (x-axis negative direction side) of the copper pipe 2111g. One end of the copper busbar 2112b is electrically connected to the other end side (x-axis positive direction side) of the copper pipe 2111g. The other end of the copper busbar 2112b is electrically connected to one end side (x-axis positive direction side) of the copper pipe 2111j. One end of the copper busbar 2112c is electrically connected to the other end side (x-axis negative direction side) of the copper pipe 2111j. As described above, by using the copper busbar 2112a, the copper pipe 2111g, the copper busbar 2112b, and the copper pipe 2111j, a first turn (same turn) of the coil 2110 is configured. The copper busbar 2112c is used for electrically connecting the first turn and a second turn of the coil 2110.

The other end of the copper busbar 2112c is electrically connected to one end side (x-axis negative direction side) of the copper pipe 2111a. One end of the copper busbar 2112d is electrically connected to the other end side (x-axis positive direction side) of the copper pipe 2111a. The other end of the copper busbar 2112d is electrically connected to one end side (x-axis positive direction side) of the copper pipe 2111f. One end of the copper busbar 2112e is electrically connected to the other end side (x-axis negative direction side) of the copper pipe 2111f. As described above, by using the copper pipe 2111a, the copper busbar 2112d, and the copper pipe 2111f, the second turn (same turn) of the coil 2110 is configured. The copper busbar 2112e is used for electrically connecting the second turn and a third turn of the coil 2110.

The other end of the copper busbar 2112e is electrically connected to one end side (x-axis negative direction side) of the copper pipe 2111h. One end of the copper busbar 2112f is electrically connected to the other end side (x-axis positive direction side) of the copper pipe 2111h. The other end of the copper busbar 2112f is electrically connected to one end side (x-axis positive direction side) of the copper pipe 2111i. One end of the copper busbar 2112g is electrically connected to the other end side (x-axis negative direction side) of the copper pipe 2111i. As described above, by using the copper pipe 2111h, the copper busbar 2112f, and the copper pipe 2111i, the third turn (same turn) of the coil 2110 is configured. The copper busbar 2112g is used for electrically connecting the third turn and a fourth turn of the coil 2110.

The other end of the copper busbar 2112g is electrically connected to one end side (x-axis negative direction side) of the copper pipe 2111b. One end of the copper busbar 2112h is electrically connected to the other end side (x-axis positive direction side) of the copper pipe 2111b. The other end of the copper busbar 2112h is electrically connected to one end side (x-axis positive direction side) of the copper pipe 2111e. One end of the copper busbar 2112i is electrically connected to the other end side (x-axis negative direction side) of the copper pipe 2111e. As described above, by using the copper pipe 2111b, the copper busbar 2112h, and the copper pipe 2111e, the fourth turn (same turn) of the coil 2110 is configured. The copper busbar 2112i is used for electrically connecting the fourth turn and a fifth turn of the coil 2110.

The other end of the copper busbar 2112i is electrically connected to one end side (x-axis negative direction side) of the copper pipe 2111c. One end of the copper busbar 2112j is electrically connected to the other end side (x-axis positive direction side) of the copper pipe 2111c. The other end of the copper busbar 2112j is electrically connected to one end side (x-axis positive direction side) of the copper pipe 2111d. One end of the copper busbar 2130 is electrically connected to the other end side (x-axis negative direction side) of the copper pipe 2111d. As described above, by using the copper pipe 2111c, the copper busbar 2112j, and the copper pipe 2111d, the fifth turn (same turn) of the coil 2110 is configured. As described above, the copper busbar 2130 is used for connecting the coils 2110, 2210 (the fifth turn of the coil 1110 and a first turn of the coil 2210) in series. The other end of the copper busbar 2130 is electrically connected to one end side (x-axis negative direction side) of the copper pipe 2221a provided to the coil 2210.

In the coil 2110 provided to the upper inductor 2100, a winding start portion of the first turn (the copper busbar 2112a) is electrically connected to the one end 5001 of the alternating-current power supply 5000. On the contrary, in the coil 2210 provided to the lower inductor 2200, a winding start portion of the first turn (the copper pipe 2211a) is electrically connected to the copper busbar 2130. Further, in the coil 2110 provided to the upper inductor 2100, a winding end portion of the fifth turn (the copper pipe 2111d) is electrically connected to the copper busbar 2130. On the contrary, in the coil 2210 provided to the lower inductor 2200, a winding end portion of the fifth turn (the copper busbar 2212j) is electrically connected to the other end 5002 of the alternating-current power supply 5000.

Except for these points, the electrical connection relation between the copper pipes 2211a to 2211j and the copper busbars 2212a to 2212j of the coil 2210 provided to the lower inductor 2200, is similar to the electrical connection relation between the copper pipes 2111a to 2111j and the copper busbars 2112a to 2112j of the coil 2110 provided to the upper inductor 2100. Therefore, as the explanation of the coil 2210 provided to the lower inductor 2200, an explanation regarding the copper pipes 2211a to 2211j and the copper busbars 2212a to 2212j used for configuring respective turns will be made, and a concrete explanation of the connection relation between the copper pipes 2211a to 2211j and the copper busbars 2212a to 2212j used for configuring the first turn to the fifth turn, will be omitted.

First, by using the copper pipe 2211a, the copper busbar 2212a, and the copper pipe 2211f, the first turn (same turn) of the coil 2210 is configured. The copper busbar 2212b is used for electrically connecting the first turn and the second turn of the coil 2210.

Further, by using the copper pipe 2211g, the copper busbar 2212c, and the copper pipe 2211j, the second turn (same turn) of the coil 2210 is configured. The copper busbar 2212d is used for electrically connecting the second turn and the third turn of the coil 2210.

Further, by using the copper pipe 2211b, the copper busbar 2212e, and the copper pipe 2211e, the third turn (same turn) of the coil 2210 is configured. The copper busbar 2212f is used for electrically connecting the third turn and the fourth turn of the coil 2210.

Further, by using the copper pipe 2211h, the copper busbar 2212g, and the copper pipe 2211i, the fourth turn (same turn) of the coil 2210 is configured. The copper busbar 2212h is used for electrically connecting the fourth turn and the fifth turn of the coil 2210.

Further, by using the copper pipe 2211c, the copper busbar 2212i, and the copper pipe 2211d, the fifth turn (same turn) of the coil 2210 is configured. To the other end side (x-axis negative direction side) of the copper pipe 2211d, one end of the copper busbar 2212j is electrically connected. The other end of the copper busbar 2212j is electrically connected to the other end 5002 of the alternating-current power supply 5000.

Fig. 2 and Fig. 5 exemplify a case where the size and the shape of the copper pipes 2111a to 2111j, 2211a to 2211j are the same. The copper pipes 2111a to 2111j, 2211a to 2211j have a hollow rectangular parallelepiped shape. A cooling medium (cooling water, for example) is supplied to hollow portions of the copper pipes 2111a to 2111j, 2211a to 2211j.

Note that similarly to Fig. 3, Fig. 5 also exemplifies a case where the conductor plate M is subjected to induction heating by realizing that, since the coils 2110, 2210 are connected in series, directions at the same time of magnetic fluxes generated from the coils 2110, 2210 by the alternating currents that flow through the coils 2110, 2210 are set to be substantially the same (preferably the same), and alternating magnetic fields are made to intersect substantially perpendicular (preferably perpendicular) to the plate surface of the conductor plate M.

However, as long as it is realized that the directions at the same time of the magnetic fluxes generated from the coils 2110, 2210 by the alternating currents that flow through the coils 2110, 2210 are set to be substantially the same (preferably the same), and the alternating magnetic fields are made to intersect substantially perpendicular (preferably perpendicular) to the plate surface of the conductor plate M, the coils 2110, 2210 may also be connected in parallel. Further, the coils 2110, 2210 may not be electrically connected. In this case, the alternating currents that flow through the coils 2110, 2210 are alternating currents supplied from separate alternating-current power supplies.

When the coils 2110, 2210 are connected in parallel, the copper busbar 2130 becomes unnecessary, for example. Instead of that, the one end side (x-axis negative direction side) of the copper pipe 2211a provided to the coil 2210 is connected to the one end 5001 of the alternating-current power supply 5000 via the copper busbar 2112a and the like. Further, the other end side (x-axis negative direction side) of the copper pipe 2111d provided to the coil 1110 is connected to the other end 5002 of the alternating-current power supply 5000. The other end side (x-axis negative direction side) of the copper pipe 2111d provided to the coil 1110 may also be connected to the other end 5002 of the alternating-current power supply 5000 via the copper busbar 2212j and the like. When the coils 2110, 2210 are connected in parallel, the turn number of the whole coils 2110, 2210 in the induction heating device 2000 becomes five.

Note that Fig. 5 exemplified the case where, in the coil 2210, a priority is given to the winding order of the copper pipes 2211a, 2211e arranged at the positions close to the conductor plate M, out of the two copper pipes 2211a and 2211g, and 2211e and 2211i arranged in the plate thickness direction of the conductor plate M (z-axis direction), for the convenience of notation. Concretely, the case was exemplified in which although the copper pipe 2211a configures the first turn, the copper pipe 2211g configures the second turn. Further, the case was exemplified in which although the copper pipe 2211e configures the third turn, the copper pipe 2211i configures the fourth turn. However, it is also possible to configure that a path through which the alternating current flowing through the coil 2110 flows, and a path through which the alternating current flowing through the coil 2220, satisfy a relation of plane symmetry in which the virtual plane SL is set to a plane of symmetry. In this case, a priority may also be given to the winding order of the copper pipes 2221g, 2221j arranged at the positions far from the conductor plate M, over the winding order of the copper pipes 2211a, 2221e, for example.

The cores 1120, 1220 of the induction heating device 2000 illustrated in Fig. 2 are the same as the cores 1120, 1220 of the induction heating device 1000 explained while referring to Fig. 4. Note that as explained while referring to Fig. 3, also in Fig. 5, the copper busbars 2112a to 2112j, 2212a to 2212j are respectively attached to the copper pipes 2111a to 2111j, 2211a to 2211j, while avoiding regions of the copper pipes 2111a to 2111j, 2211a to 2211j that are attached to the cores 1120, 1220.

In a similar manner to the induction heating device 1000 explained while referring to Fig. 1 and Fig. 3, also in the induction heating device 2000 illustrated in Fig. 2 and Fig. 5, the coils 2110, 2210 are configured to have the plurality of copper pipes 2111a to 2111j, 2211a to 2211j that are electrically connected to each other. In the example illustrated in Fig. 2 and Fig. 5, each of the copper pipes 2111a to 2111j, 2211a to 2211j is one example of the conductor portion. Further, at least two copper pipes out of the copper pipes 2111a to 2111j, 2211a to 2211j are respectively arranged in the one slot 1121a, 1121b, 1221a, 1221b.

In the one slot 1121a, 1121b, 1221a, 1221b, at least one of the first copper pipes 2111a to 2111f, 2211a to 2211c to 2211f is configured to be arranged.

Further, in the one slot 1121a, 1121b, 1221a, 1221b, at least one of the second copper pipes 2111g to 2111h, 2111i to 2111j, 2211g to 2211h, 2211i to 2211j is configured to be arranged.

In the example illustrated in Fig. 2 and Fig. 5, each of the first copper pipes 2111a to 2111f, 2211a to 2211f is one example of the first conductor portion. Further, each of the second copper pipes 2111g to 2111h, 2111i to 2111j, 2211g to 2211h, 2211i to 2211j is one example of the second conductor portion.

Further, in the one slot 1121a, 1121b, 1221a, 1221b, it is set that the first copper pipes 2111a to 2111f, 2211a to 2211f, and the second copper pipes 2111g to 2111h, 2111i to 2111j, 2211g to 2211h, 2211i to 2211j configure different turns in the coils 2110, 2210, respectively.

For example, as described above, the first copper pipes 2111a, 2111f configure the second turn of the coil 2110, and the second copper pipes 2111g, 2111j configure the first turn of the coil 2110. Therefore, the first copper pipes 2111a, 2111f, and the second copper pipes 2111g, 2111jf configure different turns in the coil 2110. In this case, the first copper pipes 2111a, 2111f, and the second copper pipes 2111g, 2111jf are connected in series, respectively. Further, the first copper pipes 2111b, 2111e configure the fourth turn of the coil 2110, and the second copper pipes 2111h, 2111i configure the third turn of the coil 2110. Therefore, the first copper pipes 2111b, 2111e, and the second copper pipes 2111h, 2111i configure different turns, respectively, in the coil 2110. In this case, the first copper pipes 2111b, 2111e, and the second copper pipes 2111h, 2111i are connected in series, respectively.

In like manner, the first copper pipes 2211a, 2211f, and the second copper pipes 2211g, 2211j configure different turns in the coil 2210. In this case, the first copper pipes 2211a, 2211f, and the second copper pipes 2211g, 2211j are connected in series, respectively. Further, the first copper pipes 2211b, 2211e, and the second copper pipes 2211h, 2211i configure different turns, respectively, in the coil 2210. In this case, the first copper pipes 2211b, 2211e, and the second copper pipes 2211h, 2211i are connected in series, respectively.

Further, as exemplified in Fig. 2 and Fig. 5, in the one slot 1121a, 1121b, 1221a, 1221b, it is preferable that the first copper pipes 2111a to 2111f, 2211a to 2211f also mutually configure different turns. Further, in the one slot 1121a, 1121b, 1221a, 1221b, it is preferable that the second copper pipes 2111g to 2111h, 2111i to 2111j, 2211g to 2211h, 2211i to 2211j also mutually configure different turns.

Further, it is preferable to arrange the plurality of copper pipes 2111a to 2111c (and 2111g, 2111h, 2111c), 2111d to 2111f (and 2111d, 2111i, 2111j), 2211a to 2211c (and 2211g, 2211h, 2211c), 2211d to 2211f (and 2111d, 2111i, 2211j) in the heating length direction (y-axis direction).

Further, it is preferable to configure that the copper pipes 2111a to 2111j, 2211a to 2211j are not arranged in the high magnetic flux density regions HB. When it is configured that the copper pipes 2111a to 2111j, 2211a to 2211j are not arranged in the high magnetic flux density regions HB, it is preferable to arrange the retract first copper pipe 2111c, 2111d, 2211c, 2211d at a position far from the conductor plate M relative to the high magnetic flux density region HB so that at least a part of the position (y-coordinate) in the heating length direction (y-axis direction) overlaps with the high density region HB, in the one slot 1121a, 1121b, 1221a, 1221b.

When the cores 1120, 1220 are so-called E-shaped cores as illustrated in Fig. 2 and Fig. 5, in order not to arrange the copper pipes 2111a to 2111j, 2211a to 2211j in the high magnetic flux density regions HB, out of the copper pipes arranged in the one slot 1121a, 1121b, 1221a, 1221b, of the cores 1120, 1220, the retract first copper pipes 2111c, 2111d, 2211c, 2211d arranged at positions closest to the first leg portions 1122, 1222 of the cores 1120, 1220, are preferably arranged at positions far from the conductor plate M relative to the tip faces of the first leg portions 1122, 1222.

Note that in Fig. 2, Fig. 4, and Fig. 5, a case is exemplified in which the first copper pipes 2111a to 2111b, 2111e to 2111f, 2211a to 2211b, 2211e to 2211f at a position close to the conductor plate M relative to the retract first copper pipe 2111c, 2111d, 2211c, 2211d, exist in the one slot 1121a, 1121b, 1221a, 1221b.

Further, when it is configured that the copper pipes 2111a to 2111j, 2211a to 2211j are not arranged in the high magnetic flux density regions HB (the regions with the highest magnetic flux density), at least one of (a) to (d) described above is preferably realized.

Regarding (a) described above, in the example illustrated in Fig. 2, Fig. 4, and Fig. 5, in the one slot 1121a, the number of the first copper pipe and the second copper pipe arranged in the z-axis direction on a relatively y-axis positive direction side, is one (refer to the first copper pipe 2111c). Further, in the one slot 1121a, the number of the first copper pipe and the second copper pipe arranged in the z-axis direction on a relatively y-axis center side, is two (refer to the first copper pipe 2111b and the second copper pipe 2111h). Further, in the one slot 1121a, the number of the first copper pipe and the second copper pipe arranged in the z-axis direction on a relatively y-axis negative direction side, is two (refer to the first copper pipe 2111a and the second copper pipe 2111g).

Regarding (b) described above, in the example illustrated in Fig. 2, Fig. 4, and Fig. 5, in the one slot 1121a, the number of the first copper pipe and the second copper pipe arranged in the plate thickness direction of the conductor plate M (z-axis direction), is one (the smallest) at the position where the position (y-coordinate) in the heating length direction (y-axis direction) overlaps with the high magnetic flux density region HB (the region with the highest magnetic flux density) (refer to the first copper pipe 2111c).

Regarding (c) described above, in the example illustrated in Fig. 2, Fig. 4, and Fig. 5, in the one slot 1121a, the first copper pipe 2111c at a position where the position (y-coordinate) in the heating length direction (y-axis direction) overlaps with the high magnetic flux density region HB (the region with the highest magnetic flux density), is at a position far from the conductor plate M relative to the other first copper pipes 2111a, 2111b.

Regarding (d) described above, in the example illustrated in Fig. 2, Fig. 4, and Fig. 5, figures defined by contour lines of the slots 1121a, 1121b, 1221a, 1221b each being one slot appeared in a cross section (y-z cross section) in a case where the induction heating device is cut perpendicular to the width direction of the conductor plate M (x-axis direction), are rectangles 2127a, 2127b, 2227a, 2227b, respectively (refer to Fig. 2).

Therefore, straight lines 2129a, 2129b, 2229a, 2229b passing through centroid positions 2128a, 2128b, 2228a, 2228b of the rectangles 2127a, 2127b, 2227a, 2227b, and extending in the plate thickness direction of the conductor plate M (z-axis direction), are respectively symmetry axes in the slots 1121a, 1121b, 1221a, 1221b each being one slot. Note that the straight lines 2129a, 2129b, 2229a, 2229b are not real lines.

For example, in the one slot 1121a, the first copper pipes 2111a to 2111c and the second copper pipes 2111g to 2111h do not satisfy a relation of line symmetry in which the straight line 2129a is set to the symmetry axis.

Further, the induction heating device 2000 may also have a not-illustrated shield plate, similarly to the induction heating device 1000.

(Design method)

Next, one example of a design method of the copper pipes 1111a to 1111h, 1211a to 1211h, 2111a to 2111j, 2211a to 2211j, and the cores 1120, 1220 for configuring the induction heating device so that it has a heating performance required for heating the conductor plate M, while suppressing the increase in length in the heating length direction (y-axis direction) of the induction heating device, will be explained. Here, in order to simplify the explanation, a case will be exemplified in which the shape and the size of the copper pipes 1111a to 1111h, 1211a to 1211h, 2111a to 2111j, 2211a to 2211j are the same. Further, a current density of an alternating current capable of being flowed through the copper busbars 1112a to 1112h, 1212a to 1212h, 2112a to 2112j, 2212a to 2212j, is set to be equal to or more than a current density of an alternating current capable of being flowed through the copper pipes 1111a to 1111h, 1211a to 1211h, 2111a to 2111j, 2211a to 2211j.

Accordingly, there is a need to design the copper pipes while considering the following four points.

·Current value (root mean square value) of alternating current capable of being flowed through coil
·Relation between flow velocity of cooling medium (for example, cooling water) capable of being flowed through hollow portion of copper pipe, and structure of copper pipe
·Relation between structure of copper pipe, and depth and width (length in heating length direction (y-axis direction)) of slot of core
·Relation between width of slot of core, and interval between coil of upper inductor and coil of lower inductor

Here, as illustrated in Fig. 1 and Fig. 2, a width (a length in the heating length direction (y-axis direction)) of each of the copper pipes 1111a to 1111h, 1211a to 1211h, 2111a to 2111j, 2211a to 2211j is set to $D_1$ (mm). Further, a height (a length in the plate thickness direction of the conductor plate M (z-axis direction)) of each of the copper pipes 1111a to 1111h, 1211a to 1211h, 2111a to 2111j, 2211a to 2211j is set to $D_2$ (mm). Further, a width of each of the slots 1121a, 1121b, 1221a, 1221b is set to $K_1$ (mm). Further, a depth of each of the slots 1121a, 1121b, 1221a, 1221b is set to $K_2$ (mm).

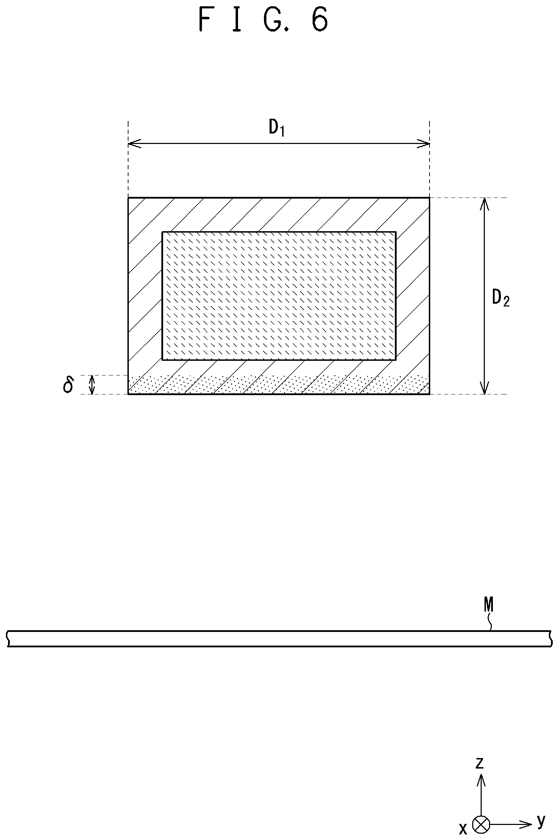

Fig. 6 is a view explaining one example of a skin depth $\delta$. In the transverse flux induction heating device, the alternating current does not flow uniformly in the coil, and it flows on the conductor plate M side in a concentrated manner, as illustrated in Fig. 6. A region indicated by gray in Fig. 6 corresponds to a region in which the alternating current flows. The skin depth $\delta$ (mm) is a depth from a surface of the coil (copper pipe) on the conductor plate M side, and is expressed by the following formula (1).

$$\delta = 503.3 \times \{\rho \div (\mu_r \times f)\}^{0.5} \times 10^3 \quad \cdots \quad (1)$$

Here, $\rho$ is a resistivity ($\times 10^{-8}\,\Omega\cdot m$) of the conductor that configures the coil. $\mu_r$ is a relative permeability of the conductor that configures the coil. f is a frequency (Hz) of the alternating current that flows through the coil.

A current value $I_1$ (A) of the alternating current that flows through the coil becomes a value obtained by multiplying a current density $I_2$ (A/mm$^2$) of the alternating current defined from a cross-sectional area of the coil (copper pipe) by a cross-sectional area of the alternating current that flows through the coil (copper pipe). The current density $I_2$ of the alternating current defined from the cross-sectional area of the coil (copper pipe) can be obtained by dividing the current value $I_1$ of the alternating current that flows through the coil by the cross-sectional area (an area of a region indicated by a solid line in Fig. 6) of the coil (copper pipe). Further, the cross-sectional area of the alternating current that flows through the coil (copper pipe) is an area (= $\delta \times D_1$) of the region indicated by gray in Fig. 6. Therefore, the following formula (2) is satisfied, and by modifying the formula (2), the following formula (3) is obtained.

$$I_1 = D_1 \times \delta \times I_2 \quad \cdots \quad (2)$$

$$I_2 = I_1 \div (D_1 \times \delta) \quad \cdots \quad (3)$$

If a current density allowable as the current density $I_2$ of the alternating current defined from the cross-sectional area of the conductor portion (copper pipe) that configures the coil is assumed to be $I_{2max}$ (A/mm$^2$), there is a need to satisfy the following formula (4). Note that in the explanation below, this current density will be referred to as an allowable current density, according to need.

$$I_{2max} \geq I_1 \div (D_1 \times \delta) \quad \cdots \quad (4)$$

From the formula (3) and the formula (4), the following formula (5) is satisfied.

$$I_1 \div (I_{2max} \times \delta) \leq D_1 = I_1 \div (I_2 \times \delta) \quad \cdots \quad (5)$$

From the formula (5), the width $D_1$ of each of the copper pipes 1111a to 1111h, 1211a to 1211h, 2111a to 2111j, 2211a to 2211j is decided. Note that the allowable current density $I_{2max}$ is, for example, 40 A/mm$^2$. However, the allowable current density $I_{2max}$ is not limited to 40 A/mm$^2$. Further, the allowable current density $I_{2max}$ is preferably 60 A/mm$^2$ or less, for example.

Further, a volume flow rate of the cooling medium (cooling water, for example) that flows through the hollow portion of the copper pipe, is set to L (l/min). Further, a flow velocity allowable as the flow velocity of the cooling medium is assumed to be $v_{max}$ (m/s). Accordingly, there is a need to satisfy the following formula (6). Note that the flow velocity $v_{max}$ allowable as the flow velocity of the cooling medium is determined based on the reduction in performance of cooling the copper pipe by the cooling medium, caused by the occurrence of cavitation, for example. The flow velocity $v_{max}$ allowable as the flow velocity of the cooling medium is, for example, 5 m/s. However, the flow velocity $v_{max}$ allowable as the flow velocity of the cooling medium is not limited to 5 m/s.

$$D_2 \geq L \div (v_{max} \times 60 \times D_1 \times 10^{-3}) \quad \cdots \quad (6)$$

In the formula (6), "L $\div$ ($v_{max} \times 60 \times 10^{-3}$)" is an area of the hollow portion of the copper pipe that has to be secured at the very least for allowing the cooling medium to flow (an area (mm$^2$) of a region indicated by a dotted line in Fig. 6). From the formula (6), the height $D_2$ of each of the copper pipes 1111a to 1111h, 1211a to 1211h, 2111a to 2111j, 2211a to 2211j is decided. Note that Fig. 1 and Fig. 2 exemplify the case where the width $D_1$ of each of the copper pipes 1111a to 1111h, 1211a to 1211h, 2111a to 2111j, 2211a to 2211j is longer than the height $D_2$ of each of the copper pipes 1111a to 1111h, 1211a to 1211h, 2111a to 2111j, 2211a to 2211j. However, it is not necessarily designed as above. The former may be shorter than the latter, or the former and the latter may also be the same (namely, $D_1 < D_2$ may be satisfied, or $D_1 = D_2$ may also be satisfied.)

When the formula (6) is modified, the following formula (7) is obtained.

$$L \div (v_{max} \times 60 \times 10^{-3}) \leq D_1 \times D_2 \quad \cdots \quad (7)$$

In the formula (6), the skin depth $\delta$ is assumed to be small (namely, the area of hollow and rectangular region indicated by a solid oblique line in Fig. 6 is assumed to be 0 (zero)), and the area (= $L \div (v_{max} \times 60 \times 10^{-3})$) of the hollow portion of the copper pipe that has to be secured at the very least for allowing the cooling medium to flow, is set to be equal to or more than the area (= $D_1 \times D_2$) of the rectangular region indicated by the solid oblique line and the dotted oblique line in Fig. 6, as expressed by the formula (7). However, in order to more accurately decide the height $D_2$ of each of the copper pipes 1111a to 1111h, 1211a to 1211h, 2111a to 2111j, 2211a to 2211j, it is also possible to adopt the area (mm$^2$) of the

rectangular region indicated by the dotted oblique line in Fig. 6, instead of "$D_1 \times D_2$" in the formula (7).

The heating performance P of the induction heating device is expressed by a formula (8a) or a formula (8b) below.

$$P = (2N \times I_1)^2 \quad \cdots \quad (8a)$$

$$P = (N \times I_1)^2 \quad \cdots \quad (8b)$$

The formula (8a) expresses the heating performance P of the induction heating device in a case where the coils 1110, 2110 provided to the upper inductors 1100, 2100, and the coils 1210, 2210 provided to the lower inductors 1200, 2200, are connected in series, respectively, as illustrated in Fig. 3 and Fig. 5. The formula (8b) expresses the heating performance P of the induction heating device in a case where the coils 1110, 2110 provided to the upper inductors 1100, 2100, and the coils 1210, 2210 provided to the lower inductors 1200, 2200, are assumed to be connected in parallel, respectively, as described above as the modified example of Fig. 3 and Fig. 5.

As expressed by the formula (8a) and the formula (8b), the heating performance P of the induction heating device can be increased by increasing the turn number N of the coil. In order to realize that, there can be considered to extremely shorten the width $D_1$ of the copper pipe. However, if the width $D_1$ of the copper pipe is extremely shortened, there is a possibility that the width $D_1$ and the height $D_2$ of the copper pipe cannot be decided so as to satisfy the formula (5) and the formula (6). Accordingly, as described above in the section of (induction heating device 1000) and the section of (induction heating device 2000), by arranging the second copper pipe at the position far from the conductor plate M relative to the first copper pipe so that at least a part of the position (y-coordinate) in the heating length direction (y-axis direction) overlaps with the first copper pipe, it is possible to increase the heating performance of the induction heating device without increasing the width of the copper pipe. Concretely, if the depth $K_2$ of each of the slots 1121a, 1121b, 1221a, 1221b is decided so as to satisfy the following formula (9), it is possible to arrange at least one second copper pipe at a position far from the conductor plate M relative to the first copper pipe so that at least a part of the position (y-coordinate) in the heating length direction (y-axis direction) overlaps with the first copper pipe.

$$K_2 \geq 2 \times D_2 \quad \cdots \quad (9)$$

From the formula (9), the depth $K_2$ of each of the slots 1121a, 1121b, 1221a, 1221b is decided.

Further, when the turn number N of the coil is the odd number ($N \geq 3$), the following formula (10a) is satisfied. Further, when the turn number N of the coil is the even number ($N \geq 2$), the following formula (10b) is satisfied.

$$K_1 \geq D_1 \times \{0.5 \times (N + 1)\} \quad \cdots \quad (10a)$$

$$K_1 \geq D_1 \times \{0.5 \times N + 1\} \quad \cdots \quad (10b)$$

From the formula (10a) and the formula (10b), the width $K_1$ of each of the slots 1121a, 1121b, 1221a, 1221b is decided.

Here, Fig. 1 and Fig. 3 exemplified the case where the turn numbers N of the coils 2110, 2210 are four, respectively. Further, Fig. 2 and Fig. 5 exemplified the case where the turn numbers N of the coils 2110, 2210 are five, respectively. However, the turn number N of the coil is only required to be two or more. The turn number N of the coil is determined so that the voltage and the current for obtaining the capacity required for heating the conductor plate are given to the coil within a range of capable of being given to the coil, for example.

As described above, in Fig. 1 and Fig. 2, the copper pipes 1111c to 1111d, 1211c to 1211d, 2111c to 2111d, 2211c to 2211d arranged at the positions closest to the first leg portions 1122, 1222 of the cores 1120, 1220, are preferably arranged at positions far from the conductor plate M relative to the tip faces (the end faces facing the conductor plate M while having an interval therebetween) of the first leg portions 1122, 1222. Based on the results of electromagnetic field analysis with respect to the induction heating device, and the like, the present inventors obtained a finding that it is more preferable to satisfy the following formula (11).

$$d \geq K_2 \div 5 \quad \cdots \quad (11)$$

As illustrated in Fig. 1 and Fig. 2, d (mm) is a distance in the plate thickness direction of the conductor plate M (z-axis direction) between the surfaces on the conductor plate M side of the retract first copper pipes 1111c, 1111d, 1211c, 1211d, 2111c, 2111d, 2211c, 2211d, and the tip faces of the first leg portions 1122, 1222 of the cores 1120, 1220. In the present embodiment, by satisfying the formula (11), it is realized that the distance in the plate thickness direction of the conductor plate M (z-axis direction) between the first conductor portion (for example, the retract first copper pipe 1111c) arranged at the position closest to the first leg portion (for example, the first leg portion 1122) of the core and the tip face of the first leg portion, is 1/5 times or more the depth of the slot (for example, the depth $K_2$ of the slot 1121a).

(Modified example)

Next, a modified example of the present embodiment will be explained.

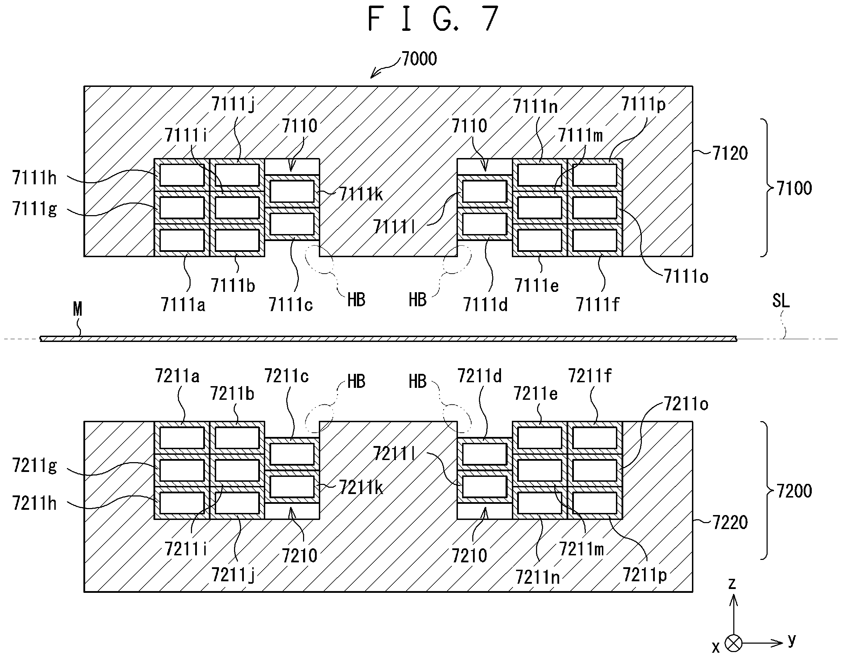

As illustrated in Fig. 1 and Fig. 2, the present embodiment exemplified the case where, in the one slot 1121a, 1121b, 1221a, 1221b, the maximum value of the arrangement number of the copper pipes 1111a to 1111h, 1211a to 1211h, 2111a to 2111j, 2211a to 2211j in the plate thickness direction of the conductor plate M (z-axis direction) is two. However, in one slot of the core, the maximum value of the arrangement number of the copper pipes in the plate thickness direction of the conductor plate M (z-axis direction) may also be three or more. Fig. 7 is a view illustrating one example of a configuration of an induction heating device 7000 in such a case. Fig. 7 is a view illustrating a cross section obtained by cutting the induction heating device perpendicular to the width direction of the conductor plate M (x-axis direction), similarly to Fig. 1 and Fig. 2. In Fig. 7, the induction heating device 7000 has an upper inductor 7100 and a lower inductor 7200. The upper inductor 7100 and the lower inductor 7200 have coils 7110, 7210, and cores 7120, 7220, respectively. Fig. 7 exemplifies a case where the maximum value of the arrangement number of copper pipes 7111a to 7111p, 7211a to 7111p in the plate thickness direction of the conductor plate M (z-axis direction) is three in one slot of the cores 7120, 7220.

Further, as illustrated in Fig. 1 and Fig. 2, the present embodiment exemplified the case where, in one slot (for example, the slot 1121a), the maximum value of the number of the second copper pipe arranged at a position far from the conductor plate M relative to the first copper pipes 1111a to 1111f, 1211a to 1211f, 2111a to 2111f, 2211a to 2211f so that at least a part of the position (y-coordinate) in the heating length direction (y-axis direction) overlaps with the corresponding first copper pipe, is one (refer to the second copper pipes 1111g, 1111h, 1211g, 1211h, 2111g to 2111h, 2111i to 2111j, 2211g to 2211h, 2211i to 2211j). However, the maximum value of the number of the second copper pipe as above may also be two or more. Fig. 7 exemplifies a case where the maximum value of the number of the second copper pipe as above is two (refer to the second copper pipes 7111g to 7111h, 7111i to 7111j, 7111m to 7111n, 7111o to 7111p, 7111g to 7111h, 7211i to 7211j, 7211m to 7211n, 7211o to 7211p).

Further, the present embodiment exemplified the case where there is no second copper pipe that is arranged at a position far from the conductor plate M relative to the retract first copper pipes 1111c, 1111d, 1211c, 1211d, 2111c, 2111d, 2211c, 2211d so that at least a part of the position (y-coordinate) in the heating length direction (y-axis direction) overlaps with the corresponding retract first copper pipe. However, it is also possible to arrange the second copper pipe that is arranged at a position far from the conductor plate M relative to the retract first copper pipe so that at least a part of the position (y-coordinate) in the heating length direction (y-axis direction) overlaps with the retract first copper pipe. Fig. 7 exemplifies a case where the second copper pipes 7111k to 7111l, 7211k to 7211l are such second copper pipes.

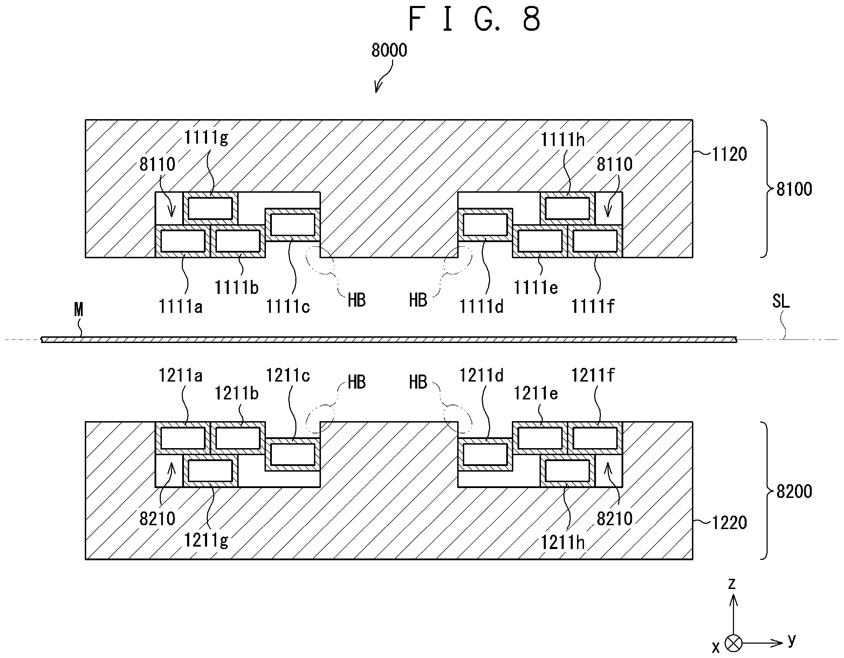

Further, the present embodiment exemplified the case where each of the second copper pipes 1111g to 1111h, 1211g to 1211h is arranged with respect to one first copper pipe 1111b, 1111e, 1211b, 1211e, 2111a to 2211b, 2111e to 2111f, 2211a to 2211b, 2211e to 2211f so that all positions (y-coordinates) in the heating length direction (y-axis direction) overlap with the corresponding first copper pipe. However, it is also possible to arrange the second copper pipe with respect to one first copper pipe so that not all but a part of the positions (y-coordinates) in the heating length direction (y-axis direction) overlaps with the first copper pipe. Fig. 8 is a view illustrating one example of a configuration of an induction heating device 8000 in such a case. Fig. 8 is a view illustrating a cross section obtained by cutting the induction heating device perpendicular to the width direction of the conductor plate M (x-axis direction), similarly to Fig. 1 and Fig. 2. In Fig. 8, the induction heating device 8000 has an upper inductor 8100 and a lower inductor 8200. The upper inductor 8100 and the lower inductor 8200 have coils 8110, 8210, and cores 1120, 1220, respectively. The induction heating device 8000 illustrated in Fig. 8 corresponds to the induction heating device 1000 illustrated in Fig. 1 in which the positions of the second copper pipes 1111g, 1111h, 1211g, 1221h are changed. Fig. 8 exemplifies a case where each of the second copper pipes 1111g, 1111h, 1211g, 1221h is arranged so that a part of the position (y-coordinate) in the heating length direction (y-axis direction) overlaps with the first copper pipes 1111a to 1111b, 1111e to 1111f, 1211a to 1211b, 1211e to 1211f each being one first copper pipe.

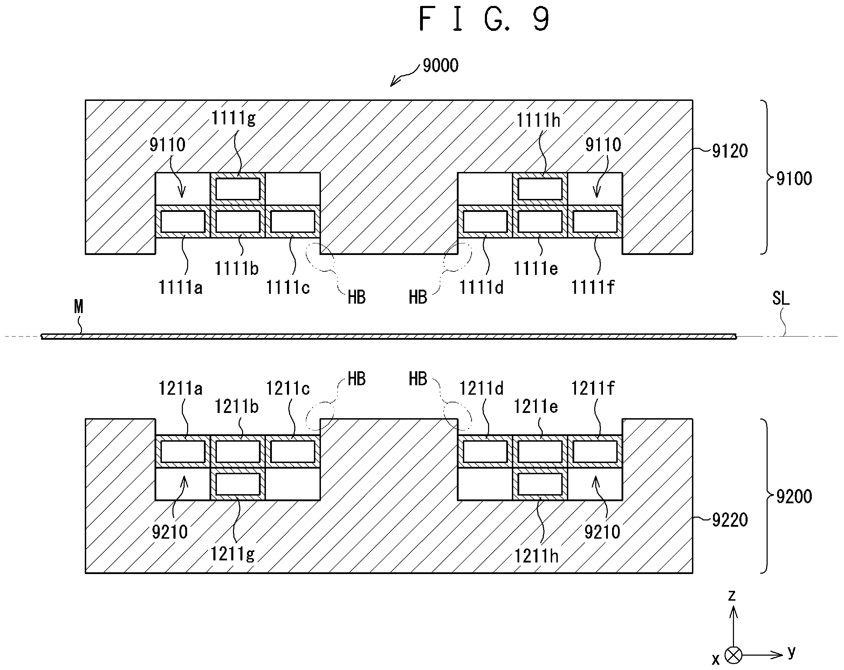

Further, the present embodiment exemplified the case where in the one slot 1121a, 1121b, 1221a, 1221b, the retract first copper pipes 1111c, 1111d, 1211c, 1221d, 2111c, 2111d, 2211c, 2221d are respectively at the positions far from the conductor plate M relative to the other first copper pipes 1111a to 1111b, 1111e to 1111f, 1211a to 1211b, 1211e to 1211f, 2111a to 2111b, 2111e to 2111f, 2211a to 2211b, 2211e to 2211f. However, it is not necessarily configured as above. Fig. 9 is a view illustrating one example of a configuration of an induction heating device 9000 in such a case. Fig. 9 is a view illustrating a cross section obtained by cutting the induction heating device perpendicular to the width direction of the conductor plate M (x-axis direction), similarly to Fig. 1 and Fig. 2. In Fig. 9, the induction heating device 9000 has an upper inductor 9100 and a lower inductor 9200. The upper inductor 9100 and the lower inductor 9200 have coils 9110, 9210, and cores 9120, 9220, respectively. The induction heating device 9000 illustrated in Fig. 9 corresponds to the induction heating device 1000 illustrated in Fig. 1 in which the positions of the first copper pipes 1111a to 1111b, 1111e to 1111f, 1211a to 1211b, 1211e to 1211f, and the positions of the second copper pipes 1111g, 1111h, 1211g, 1211h are changed, and the depth of slots of the cores 9120, 9220 is increased. Fig. 9 exemplifies a case where the positions in the plate thickness direction of the conductor plate M (z-axis direction) of the retract first copper pipes 1111c, 1111d, 1211c, 1211d, and the positions in the plate thickness direction of the conductor plate M (z-axis direction) of the other first copper pipes 1111a to 1111b, 1111e to 1111f, 1211a to 1211b, 1211e to 1211f, are set to be the same, respectively. Further, Fig. 9 exemplifies a case where the first copper pipes 1111a to 1111f, 1211a to 1211f are arranged at positions far from the conductor plate M relative to tip faces (end faces facing the conductor plate M while having an interval therebetween) of first leg portions of the cores 9120, 9220, respectively.

Further, the present embodiment exemplified the case where, in the one slot 1121a, 1121b, 1221a, 1221b, the first copper pipes 1111a to 1111f, 1211a to 1211f, and the second copper pipes 1111g to 1111h, 1211g to 1211h configure the different turns, respectively. Specifically, the present embodiment exemplified the case where all of the first copper pipes 1111a to 1111f, 1211a to 1211f arranged in the one slot 1121a, 1121b, 1221a, 1221b configure turns different from those of all of the second copper pipes 1111g to 1111h, 1211g to 1211h arranged in the corresponding slot. In this case, among the first copper pipes 1111a to 1111f, 1211a to 1211f arranged in the one slot 1121a, 1121b, 1221a, 1221b, there is no copper pipe that is connected in parallel to the second copper pipes 1111g to 1111h, 1211g to 1211h arranged in the corresponding slot.

If it is configured as above, the turn number N of the coils 1110, 1210 can be further increased while suppressing the increase in length in the heating length direction (y-axis direction) of the induction heating devices 1000, 2000, which is preferable. However, it is not necessarily configured as above as long as there is at least one first copper pipe and at least one second copper pipe that configure different turns in the coils 1110, 1210, 2110, 2210, in the one slot 1121a, 1121b, 1221a, 1221b. Specifically, it is only required that, among the first copper pipes arranged in the one slot 1121a, 1121b, 1221a, 1221b, there is at least one copper pipe that is connected in series to the second copper pipe arranged in the corresponding slot. This is because the turn number N of the coil can be increased while suppressing the increase in length in the heating length direction (y-axis direction) of the induction heating device, when compared to a case where it is not configured as above.

Further, the present embodiment exemplified the case where, in the one slot 1121a, 1121b, 1221a, 1221b, the size and the shape of the first copper pipes 1111a to 1111f, 1211a to 1211f, and the second copper pipes 1111g to 1111h, 1211g to 1211h are the same. However, it is not necessarily configured as above. For example, in the one slot 1121a, 1121b, 1221a, 1221b, a length in the plate thickness direction of the conductor plate M (z-axis direction) of the copper pipe except for the retract first copper pipe may be shorter than that of the retract first copper pipe. Further, in such a state, it is possible to set the positions of the end face on the conductor plate M side of the retract first copper pipe and the end face on the conductor plate M side of the other first copper pipe in the plate thickness direction of the conductor plate M (z-axis direction) to be the same. If it is configured as above, it is possible to reduce the depth of the slot of the core, when compared to the case exemplified in Fig. 9, for example.

Further, the present embodiment exemplified the case where the number of the leg portions provided to the cores 1120, 1220 is three (so-called E-shaped cores). However, the number of the leg portions provided to the core is not limited to three. The number of the leg portions provided to the core may be two, or four or more. When different coils are respectively arranged in a plurality of leg portions provided to the core, all of the coils preferably have the first copper pipe and the second copper pipe defined as described above. This is because it is possible to realize that the turn number N of the coils arranged in all of the leg portions can be further increased while suppressing the increase in length in the heating length direction (y-axis direction) of the induction heating device, when compared to a case where it is not configured as above. However, it is only required that at least one pair out of pairs of the coils at positions facing in the plate thickness direction of the conductor plate M (z-axis direction), among those coils, has the first copper pipe and the second copper pipe defined as described above. This is because the turn number N of the coil can be increased while suppressing the increase in length in the heating length direction (y-axis direction) of the induction heating device, when compared to a case where it is not configured as above.

(Other embodiments)

It should be noted that the above explained embodiments of the present invention merely illustrate concrete examples of implementing the present invention, and the technical scope of the present invention is not to be construed in a restrictive manner by these embodiments. That is, the present invention may be implemented in various forms without departing from the technical spirit or main features thereof.

INDUSTRIAL APPLICABILITY

The present invention can be utilized for heating a conductor plate, for example.

**Claims**

1. A transverse flux induction heating device comprising an upper inductor and a lower inductor arranged to face each other while sandwiching a conductor plate therebetween, and performing induction heating on the conductor plate by making alternating magnetic fields intersect a plate surface of the conductor plate, wherein:

   each of the upper inductor and the lower inductor has a coil and a core;
   a turn number of the coil is two or more;
   the core has a slot being a space in which the coil is arranged;
   the coil has a plurality of conductor portions electrically connected to each other;
   the conductor portions have at least one first conductor portion and at least one second conductor portion;
   the first conductor portion is the conductor portion at a position closest to the conductor plate at each position in a heating length direction in one of the slots;
   the second conductor portion is the conductor portion arranged at a position far from the conductor plate relative to at least one of the first conductor portions in one of the slots;
   at least a part of a position in the heating length direction of at least one of the first conductor portions and at least a part of a position in the heating length direction of at least one of the second conductor portions overlap with each other in one of the slots;
   the heating length direction is a direction parallel to a conveyance direction of the conductor plate; and
   in one of the slots, there is at least one of the second conductor portions electrically connected in series to the first conductor portion.

2. The transverse flux induction heating device according to claim 1, wherein
   the conductor portion is not arranged in a region with a highest magnetic flux density in the slot in which the conductor portion is arranged, when the core is excited by an alternating current that flows through the coil.

3. The transverse flux induction heating device according to claim 2, wherein
   the first conductor portion is arranged at a position far from the conductor plate relative to the region with the highest magnetic flux density to make at least a part of the position in the heating length direction overlap with the region with the highest magnetic flux density.

4. The transverse flux induction heating device according to any one of claims 1 to 3, wherein:

   the core has a first leg portion, a second leg portion, and a third leg portion;
   the second leg portion and the third leg portion are arranged on both sides in the heating length direction of the first leg portion in a state of having an interval with respect to the first leg portion; and
   the first conductor portion arranged at a position closest to the first leg portion in one of the slots, is arranged at a position far from the conductor plate relative to a tip face of the first leg portion.

5. The transverse flux induction heating device according to claim 4, wherein
   a distance in a plate thickness direction of the conductor plate between the first conductor portion arranged at the position closest to the first leg portion in one of the slots and the tip face of the first leg portion, is 1/5 times or more a depth of the slot.

6. The transverse flux induction heating device according to any one of claims 1 to 5, wherein
   a plurality of the conductor portions are arranged in the heating length direction in one of the slots.

# FIG. 1

EP 4 565 005 A1

# FIG. 2

EP 4 565 005 A1

F I G. 3

F I G. 4

F I G. 5

# F I G. 6

D₁

D₂

δ

M

z

x

y

EP 4 565 005 A1

# F I G. 7

F I G. 8

EP 4 565 005 A1

# FIG. 9

## INTERNATIONAL SEARCH REPORT

| International application No. |
| --- |
| **PCT/JP2023/026780** |

**A. CLASSIFICATION OF SUBJECT MATTER**

*H05B 6/10*(2006.01)i; *H05B 6/36*(2006.01)i
FI: H05B6/10 381; H05B6/36 D

According to International Patent Classification (IPC) or to both national classification and IPC

**B. FIELDS SEARCHED**

Minimum documentation searched (classification system followed by classification symbols)

H05B6/10; H05B6/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2010-257894 A (NIPPON STEEL ENGINEERING CO., LTD.) 11 November 2010 (2010-11-11) paragraph [0003], fig. 3 | 1 |
| Y | | 2-6 |
| Y | Microfilm of the specification and drawings annexed to the request of Japanese Utility Model Application No. 85789/1978 (Laid-open No. 2090/1980) (MITSUBISHI ELECTRIC CORP.) 08 January 1980 (1980-01-08), specification, p. 3, line 1 to p. 5, line 13, fig. 2-4 | 2-5 |
| Y | JP 2020-13635 A (FUJI ELECTRIC CO., LTD.) 23 January 2020 (2020-01-23) paragraph [0026], fig. 5 | 6 |
| Y | JP 9-245947 A (MATSUSHITA ELECTRIC INDUSTRIAL CO., LTD.) 19 September 1997 (1997-09-19) paragraph [0029], fig. 3 | 6 |
| A | JP 2012-113838 A (SEKISUI CHEMICAL CO., LTD.) 14 June 2012 (2012-06-14) paragraphs [0025]-[0028], fig. 1-4 | 1-6 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2023** | **19 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/026780**

### C. DOCUMENTS CONSIDERED TO BE RELEVANT

| Category* | Citation of document, with indication, where appropriate, of the relevant passages | Relevant to claim No. |
|---|---|---|
| A | CD-ROM of the specification and drawings annexed to the request of Japanese Utility Model Application No. 20549/1993 (Laid-open No. 73895/1994) (NIPPON KOKAN KK) 18 October 1994 (1994-10-18), entire text, all drawings | 1-6 |

Form PCT/ISA/210 (second sheet) (January 2015)

30

# EP 4 565 005 A1

## INTERNATIONAL SEARCH REPORT
### Information on patent family members

International application No.

**PCT/JP2023/026780**

| Patent document cited in search report | | | Publication date (day/month/year) | Patent family member(s) | Publication date (day/month/year) |
|---|---|---|---|---|---|
| JP | 2010-257894 | A | 11 November 2010 | (Family: none) | |
| JP | 55-2090 | U1 | 08 January 1980 | (Family: none) | |
| JP | 2020-13635 | A | 23 January 2020 | (Family: none) | |
| JP | 9-245947 | A | 19 September 1997 | (Family: none) | |
| JP | 2012-113838 | A | 14 June 2012 | (Family: none) | |
| JP | 6-73895 | U1 | 18 October 1994 | (Family: none) | |

Form PCT/ISA/210 (patent family annex) (January 2015)

**REFERENCES CITED IN THE DESCRIPTION**

**Patent documents cited in the description**

- JP 2022121529 A

- JP 2010027470 A